# EUROPÄISCHE PATENTANMELDUNG

(11) **EP 4 506 187 A1**
(43) Veröffentlichungstag der Anmeldung: **12.02.2025**
(21) Anmeldenummer: 23190976.3
(22) Anmeldetag: 11.08.2023
(51) Int. Cl.: B60C 23/00, B60C 23/04

(54) **REIFENDRUCKÜBERWACHUNG**

(71) Anmelder: Schmitz Cargobull AG, 48341 Altenberge (DE)
(72) Erfinder: Vens, Rainer, 48653 Coesfeld (DE)
(74) Vertreter: Cohausz & Florack

(57) **Zusammenfassung**

Es werden Verfahren und Vorrichtungen zur Reifendrucküberwachung vorgeschlagen.

## Beschreibung

### Gebiet

Die Erfindung betrifft Verfahren und Vorrichtungen zur Reifendrucküberwachung, insbesondere eines Reifens eines Fahrzeuges, insbesondere eines Nutzfahrzeuges, insbesondere eines Straßennutzfahrzeuges.

### Hintergrund

Heutzutage werden im privaten und gewerblichen Straßenverkehr fast ausschließlich bereifte Fahrzeuge betrieben, deren Räder mit gasgefüllten Reifen ausgestattet sind. Für die Funktionsfähigkeit dieser Räder ist ein ausreichender, jedoch nicht zu hoher Reifendruck notwendig. Ein zu niedriger Reifendruck kann beispielsweise den Rollwiderstand des Reifens und damit Verschleiß und Fahrkosten erhöhen. Ein zu hoher Reifendruck hingegen kann zu Beschädigungen des Reifens und damit zu Fahrtausfällen führen.

Eine manuelle Überwachung des Reifendrucks durch die Nutzer des jeweiligen Fahrzeugs ist aufwändig und wird allzu häufig nicht in der erforderlichen Regelmäßigkeit vollzogen. Die Folge ist ein erhöhtes Risiko eines falschen (insbesondere zu niedrigen aber auch möglicherweise zu hohen) Reifendrucks.

### Zusammenfassung einiger beispielhafter Ausführungsformen der Erfindung

Die Erfindung befasst sich unter anderem damit, eine Reifendrucküberwachung mit einer entsprechenden Sensorik bereitzustellen. An oder in einem Rad umfassend einen Reifen und eine Felge (z.B. und mit einem Ventil) wird hierbei ein jeweiliger Drucksensor verbaut, der den Druck des Gases im Reifen des Rades erfasst.

Vorteilhaferweise kann eine teilweise automatisierte, sensorbasierte Reifendrucküberwachung den Nutzer seiner Pflicht entheben, den Reifendruck manuell zu erfassen. Damit wird das Risiko menschlichen Versagens in Form lückenhafter Reifendruckkontrollen reduziert. Die Fahrt wird sicherer und günstiger.

Doch auch bei einer sensorbasierten Reifendrucküberwachung können menschliche Fehler die Überwachungsgüte beeinträchtigen. So ist es beispielsweise nicht selten erforderlich, bei der Installation von Reifendrucksensoren und/oder bei jedem Rad- und/oder Reifenwechsel eine Verknüpfung zwischen einer (z.B. neuen) Radposition und dem jeweiligen Reifendrucksensor in einem zugehörigen Überwachungssystem einzupflegen. Fehlerhafte Zuordnungen können die korrekte Funktionsweise der Reifendrucküberwachung verhindern und führen zu weiteren Risiken, insbesondere wenn sich der Nutzer des Fahrzeugs auf die korrekte Funktionsweise einer automatisierten Reifendrucküberwachung verlässt. Darüber hinaus ist eine manuelle Zuordnung zwischen Radposition und Reifendrucksensor aufwendig und erhöht die Instandhaltungskosten des Fahrzeugs.

Eine Aufgabe der vorliegenden Erfindung ist es daher, Verfahren und Vorrichtungen zur Reifendrucküberwachung bereitzustellen, welche eine automatisierte Zuordnung zwischen Reifendrucksensoren und Radpositionen erleichtern und/oder ermöglichen. Insbesondere soll diese Aufgabe mit der am Fahrzeug bereits existierenden Reifendrucksensorik gelöst werden.

Gemäß einem ersten Aspekt der Erfindung wird ein Verfahren zur Reifendrucküberwachung eines Fahrzeugs, insbesondere Nutzfahrzeugs, ausgeführt durch eine Reifendrucksensoranordnung, vorgeschlagen, umfassend
- Erfassen eines Innendrucks eines Reifens eines Rads,
- Senden eines Kommunikationssignals umfassend eine Reifendruckindikation und eine Drehwinkelindikation, wobei die Reifendruckindikation zumindest den erfassten Innendruck des Reifens repräsentiert, und wobei die Drehwinkelindikation zumindest eine Drehwinkelposition des Rads repräsentiert.

Ein Fahrzeug kann vorliegend insbesondere ein bereiftes Fahrzeug sein. Beispielsweise kann das Fahrzeug zumindest 1, 2, 3, 4, 6, 8, 10, 12 oder mehr Räder mit jeweiligem Reifen aufweisen. Das offenbarte Fahrzeug kann beispielsweise ein Fahrzeug für den privaten Straßenverkehr, insbesondere ein motorisiertes Zwei- oder Dreirad (Motorrad, Moped, Roller) oder ein Personenkraftwagen (PKW) sein.

Das offenbarte Fahrzeug kann insbesondere ein Nutzfahrzeug sein, zum Beispiel ein Lastkraftwagen, ein Anhänger oder ein Sattelauflieger. Nutzfahrzeuge sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Nutzfahrzeugaufbauten auf, welche der Aufnahme der zu transportierenden Güter in einem Innenraum, insbesondere einem Laderaum, dienen. So sind beispielsweise Kofferaufbauten mit festen Seitenwänden und einem festen Dach bekannt, welche den Innenraum umschließen. Alternativ oder zusätzlich kann der Anhänger auch eine Außenwand aufweisen, welche zumindest teilweise eine Plane umfasst (Planenaufbauten).

Das offenbarte Verfahren umfasst das Erfassen eines Innendrucks eines Reifens eines Rads. Das Rad ist hierbei insbesondere ein Rad des Fahrzeugs. Das Rad kann an einer Radachse des Fahrzeugs angeordnet sein, welche beispielsweise mit einer Rotationsachse des Rades zusammenfallen kann. Das Rad umfasst insbesondere eine Felge und einen Reifen. Der Reifen kann auf die Felge aufgespannt sein. Ein Innenraum des Rads, welcher insbesondere von dem Reifen und der Felge begrenzt sein kann, ist mit einem Gas gefüllt, insbesondere Luft. Der Innenraum ist beispielsweise durch ein Ventil des Rads mit dem Gas befüllbar und/oder entleerbar. In dem Innenraum des Reifens besteht ein Innendruck. Der Innendruck kann beispielsweise für PKW im Bereich 2-3 bar liegen. Bei Nutzfahrzeugen können höhere Innendrücke im Bereich 8-10 bar vorliegen.

Ein Rad ist also insbesondere ein am Fahrzeug montiertes Rad. Das Rad kann eine (insbesondere feste und/oder unveränderliche) Radposition am Fahrzeug haben. Eine Radposition kann beispielsweise durch die Fahrzeugseite (beispielsweise in Vorwärtsfahrtrichtung links oder rechts) bestimmt sein. Eine Radposition kann alternativ oder zusätzlich entlang der Vorwärtsfahrtrichtung (beispielsweise in Vorwärtsfahrtrichtung hinten oder vorne, an Position 1 von N, wobei 1 der in Vorwärtsfahrtrichtung vordersten Position und N der in Vorwärtsfahrtrichtung hinteren Position entspricht) definiert sein. Eine Radposition kann alternativ oder zusätzlich in seiner Position entlang einer Radachse und/oder Rotationsachse des Rads und/oder senkrecht zur Vorwärtsfahrtrichtung definiert sein, insbesondere im Falle von mehreren Rädern, welche direkt nebeneinander auf der Radachse angeordnet sind (bspw. im Falle von Zwillingsrädern). Eine beispielhafte Radposition könnte beispielsweise durch die obigen drei Positionsangaben als (links, Position 1, zweites Rad von außen) definiert sein.

Der Innendruck eines Reifens eines Rads des Fahrzeugs kann insbesondere mittels eines Drucksensors einer Reifendrucksensoranordnung erfasst werden. Die Reifendrucksensoranordnung kann insbesondere im Bereich eines Rads des Fahrzeugs angeordnet sein, beispielsweise im oder am Reifen eines Rads und/oder an einer Felge des Rads und/oder an einem Ventil des Rads. Die Reifendrucksensoranordnung kann zumindest einen Drucksensor und Mittel zur Ausführung des Verfahrens nach dem ersten Aspekt umfassen.

Der Innendruck kann kontinuierlich und/oder periodisch, insbesondere in vordefinierten Intervallen, erfasst werden. Beispielsweise kann der Innendruck in zeitlichen Abständen von zumindest 10s, 30s, 1min, 2min, 5min, 10min, 15min, 20min, 30min, 40min, 50min, 1h, 2h, 3h, 4h, 5h, 10h, 12h, 1d oder länger bestimmt werden. Beispielsweise kann der zeitliche Abstand auch höchstens 10s, 30s, 1min, 2min, 5min, 10min, 15min, 20min, 30min, 40min, 50min, 1h, 2h, 3h, 4h, 5h, 10h, 12h, 1d oder weniger betragen.

Das offenbarte Verfahren umfasst ferner das Senden eines Kommunikationssignals.

Das Kommunikationssignal ist insbesondere ein drahtloses Kommunikationssignal, beispielsweise nach einem drahtlosen Kommunikationsstandard wie ein Bluetooth (https://www.bluetooth.com), Zigbee, einem anderen Kommunikationsstandard, einer nicht standardisierten, beispielsweise proprietären Funkmethode, und/oder Kombinationen hieraus. Das Kommunikationssignal kann auf eine Trägerfrequenz aufmoduliert sein, beispielsweise einer Trägerfrequenz von einigen hundert MHz, beispielsweise 200 - 800 MHz, beispielsweise 433 MHz oder auch höhere Frequenzen von 2,4 bis 2,4835 GHz (z.B. Bluetooth).

Das Kommunikationssignal kann eine Gesamtsendung als ein einziges, zusammenhängendes Signal sein, welches in einem, also ohne eine Sendepause, übertragen wird. Auch kann das Kommunikationssignal in mehrere Teilsendungen unterteilt sein. Die Teilsendungen können in einem zeitlichen Abstand zueinander gesendet werden. Das Kommunikationssignal kann beispielsweise ein oder mehrere Datenpakete umfassen. beispielsweise mehrere voneinander separate Datenpakete, welche jeweils unabhängig von den übrigen Datenpaketen empfangen werden können. Eine Gesamtsendung kann mehrere Datenpakete umfassen. Auch können Teilsendungen jeweils zumindest ein Datenpaket umfassen. Eine Gesamtheit von Datenpaketen kann auf mehrere Teilsendungen aufgeteilt werden, sodass zumindest zwei Datenpakete in voneinander verschiedenen Teilsendungen übertragen werden.

Das Kommunikationssignal kann als Broadcast-Signal gesendet werden, beispielsweise ohne spezifischen Empfänger und ohne Notwendigkeit einer Rückmeldung seitens des Empfängers.

Für das Kommunikationssignal kann eine Sendedauer bestimmt sein, welche der Zeitspanne entspricht, welche zwischen dem Beginn und dem Ende des Sendens verstreicht. Auch kann für das Kommunikationssignal ein Sendezeitpunkt bestimmt sein, beispielsweise kann dieser den Beginn des Sendens des Kommunikationssignals, die Vollendung des Sendens oder auch einen Zeitpunkt während der Sendedauer (beispielsweise die zeitliche Mitte der Sendedauer) bezeichnen.

Für das Senden kann ein Sendedrehwinkel bestimmt werden. Der Sendedrehwinkel entspricht einer Drehwinkelposition des Rads, zu der das Senden stattfindet. Beispielsweise kann der Sendedrehwinkel die Drehwinkelposition des Rads zum Beginn oder Ende des Sendens angeben oder auch einen Wertebereich von Drehwinkelpositionen, der während der Sendedauer durchlaufen wird.

Das Kommunikationssignal umfasst eine Reifendruckindikation. Die Reifendruckindikation repräsentiert zumindest den erfassten Innendruck des Reifens.

Wenn hier und im Folgenden eine Indikation (hier die Reifendruckindikation) eine Information repräsentiert (hier den erfassten Innendruck), ist damit insbesondere gemeint, dass die Informationen aus der Indikation ableitbar sind. Die Indikation kann beispielsweise ein Informationselement sein, beispielsweise eine Abfolge von Bits, welches mit einer geeigneten Auswertungsmethode in die Information umgewandelt werden kann. Die Umwandlung der Indikation in die Information kann weitere Angaben benötigen. Beispielsweise kann eine Reifendruckindikation einem Index zu einer Tabelle mit Innendruckwerten eines Reifens entsprechen. Es ist aber auch möglich, dass aus der Indikation allein, ohne Zuhilfenahme weiterer Angaben, die Information abgeleitet werden kann. Beispielsweise kann die Reifendruckindikation einem Fließkommawert entsprechen, welcher in dem Kommunikationssignal enthalten ist und der den Reifeninnendruck angibt.

Die Reifendruckindikation kann beispielsweise den (insbesondere zum Zeitpunkt der Messung aktuellen) erfassten Innendruck des Reifens repräsentieren. Auch möglich ist es, dass die Reifendruckindikation einen aus dem erfassten Innendruck abgeleiteten Wert repräsentiert. Beispielsweise kann die Reifendruckindikation einen Mittelwert, Median, Maximalwert, Minimalwert über eine Mehrzahl von erfassten Innendrücken und/oder Kombinationen hieraus repräsentieren. Die Mehrzahl von erfassten Innendrücken kann beispielsweise 2, 3, 4, 5, 10, 20 oder mehr erfasste Innendrücke umfassen. Die Mehrzahl von erfassten Innendrücken kann beispielsweise die zuletzt erfassten Innendrücke, beispielsweise welche nach dem letzten Senden erfasst wurden, umfassen.

Das Kommunikationssignal umfasst ferner eine Drehwinkelindikation. Die Drehwinkelindikation repräsentiert zumindest eine Drehwinkelposition des Rads.

Durch das Senden der Drehwinkelindikation wird ein Empfänger in die Lage versetzt, das empfangene Signal mit der Drehwinkelposition des Rads in Beziehung zu setzen. Es wurde erkannt, dass bei geeigneter Verarbeitung der Drehwinkelindikation eine automatische Zuordnung zwischen einem Reifendrucksensor und einer Radposition, an welcher der Reifendrucksensor angeordnet ist, vorgenommen werden kann.

Die Drehwinkelposition des Rads kann beispielsweise verstanden werden als eine Winkelstellung des Rads um die Radachse, an welcher das Rad gelagert ist. Beispielsweise kann jeder Winkelstellung des Rads eine Gradzahl zwischen 0° und 360° zugeordnet werden. Die Drehwinkelindikation ist in diesem Falle repräsentativ für die Gradzahl der momentanen Drehwinkelposition.

Die Drehwinkelposition des Rads kann mit einer Drehwinkelposition der Reifendrucksensoranordnung korrelieren und/oder mit ihr übereinstimmen. Die Reifendrucksensoranordnung ist insbesondere so an dem Rad angeordnet (insbesondere befestigt), dass sie der Drehung des Rads folgt. Es wurde erkannt, dass die Drehwinkelposition des Rads aus der Drehwinkelposition der Reifendrucksensoranordnung abgeleitet werden kann. Genauer kann die Drehwinkelposition des Rads stets mit der Drehwinkelposition der Reifendrucksensoranordnung zusammenfallen.

Die Drehwinkelindikation erlaubt eine Ableitung der Drehwinkelposition. Beispielsweise kann die Drehwinkelindikation einen Drehwinkelwert umfassen. Die Drehwinkelindikation kann alternativ und/oder zusätzlich ein Informationselement umfassen, aus welchem die Drehwinkelposition abgeleitet werden kann, beispielsweise unter Zuhilfenahme weiterer Angaben (z.B. einer Tabelle und/oder eines physikalischen Modells des Reifens und/oder eines für diese Ableitung trainierten Modells des maschinellen Lernens).

Die Drehwinkelindikation kann beispielsweise die Drehwinkelposition (des Rads und/oder der Reifendrucksensoranordnung) zum Zeitpunkt des Sendens des Kommunikationssignals repräsentieren (Sendedrehwinkel). Beispielsweise kann eine Abweichung zwischen der von der Drehwinkelindikation repräsentierten Drehwinkelposition und dem Sendedrehwinkel höchstens 5°, 10°, 15°, 20°, 25° oder 30° betragen.

Eine Drehwinkelindikation kann beispielsweise zusätzlich und/oder alternativ einen Zeitwert umfassen. Beispielsweise kann die Drehwinkelindikation eine Zeitspanne angeben, die seit dem Durchlaufen einer vordefinierten Drehwinkelposition verstrichen ist. Die vordefinierte Drehwinkelposition kann beispielsweise einer obersten und/oder untersten Position der Reifendrucksensoranordnung über eine Radrotation hinweg entsprechen.

Die Drehwinkelindikation kann beispielsweise zusätzlich und/oder alternativ eine Beschleunigung repräsentieren. Es wurde erkannt, dass aus zumindest einer erfassten Beschleunigung die Drehwinkelposition des Rads abgeleitet werden kann. Beispielsweise kann die erfasste Beschleunigung eine Beschleunigung sein, welche auf die Reifendrucksensoranordnung wirkt und/oder von der Reifendrucksensoranordnung erfasst wird.

Das Senden des Kommunikationssignals kann beispielsweise mit dem Erfassen eines Innendrucks eines Reifens koordiniert sein. Beispielsweise kann für eine gegebene Erfassung eines Innendrucks ein zugeordnetes Senden des Kommunikationssignals vorgesehen werden. Beispielsweise kann in diesem Fall das Senden des Kommunikationssignals nach einem jeweiligen Erfassen des Innendrucks erfolgen. Damit kann das Kommunikationssignal in den im wesentlichen gleichen Intervallen gesendet werden, in denen der Innendruck erfasst wird. Das Senden des Kommunikationssignals kann zusätzlich oder alternativ unabhängig von dem Erfassen des Innendrucks sein. Beispielsweise kann das Senden des Kommunikationssignals erst nach Erfassen einer Mehrzahl von Innendrücken erfolgen. Das Erfassen kann also häufiger durchgeführt werden als das Senden. Beispielsweise kann nach dem Erfassen einer Mehrzahl von Innendrücken ein abgeleiteter Wert (siehe oben, Mittelwert oder andere) berechnet werden und danach einmalig gesendet werden. Auch kann das Senden mehrfach erfolgen, nach einem einzigen Erfassen des Innendrucks. Das Senden kann also häufiger durchgeführt werden also das Erfassen des Innendrucks.

Beispielsweise können für einen gegebenen (z.B. einzigen) erfassten Innendruck mehrere Kommunikationssignale versendet werden, die sich zumindest unter anderem durch ihren jeweiligen Sendedrehwinkel voneinander unterscheiden, allerdings jeweils den identischen Innendruck angeben.

Gemäß einem Ausführungsbeispiel des ersten Aspekts umfasst das Kommunikationssignal ferner eine Identifikation der Reifendrucksensoranordnung, und/oder umfasst das Kommunikationssignal ferner eine Drehrichtungsindikation des Rads, und/oder umfasst das Kommunikationssignal ferner eine Drehgeschwindigkeitsindikation des Rads.

Eine Identifikation der Reifendrucksensoranordnung kann beispielsweise dem Identifizieren der Reifendrucksensoranordnung dienen. Beispielsweise kann die Identifikation vordefiniert sein. Beispielsweise umfasst die Identifikation eine Identifikationsnummer, eine Zeichenfolge, einen Index und/oder Kombinationen hieraus. Die Identifikation kann beispielsweise eine eindeutige Kennung der Reifendrucksensoranordnung sein. D. h., dass die Identifikationen beliebiger zwei Reifendrucksensoranordnungen (z.B. an verschiedenen Radpositionen), insbesondere der Reifendrucksensoren, welche an einem Fahrzeug angeordnet sind, voneinander verschieden sind. Ausgehend von der Identifikation kann damit die Reifendrucksensoranordnung eindeutig identifiziert werden. Die Identifikation der Reifendrucksensoranordnung kann beispielsweise fest einprogrammiert sein, beispielsweise ab Herstellung zumindest einer Komponente der Reifendrucksensoranordnung. Alternativ oder zusätzlich kann die Identifikation der Reifendrucksensoranordnung veränderlich, insbesondere programmierbar sein. Beispielsweise wird die Identifikation der Reifendrucksensoranordnung in einem Konfigurationsprozess, beispielsweise beim Montieren der Reifendrucksensoranordnung am Fahrzeug, festgelegt.

Das Kommunikationssignal kann ferner eine Drehrichtungsindikation des Rads umfassen. Die Drehrichtungsindikation des Rads kann gleichermaßen eine Drehrichtungsindikation der Reifendrucksensoranordnung sein. Die Drehrichtungsindikation repräsentiert eine Drehrichtung des Rads und/oder der Reifendrucksensoranordnung bei Drehung um die Radachse, an welcher das Rad gelagert ist (auch mit Rotationsachse bezeichnet), insbesondere, während sich das Fahrzeug vorwärts bewegt. Die Drehrichtungsindikation versteht sich insbesondere nicht als eine Indikation der Drehrichtung senkrecht zur Radachse, wie sie beispielsweise beim Lenken auftritt. Die Drehrichtungsindikation lässt einen Rückschluss darauf zu, ob sich das Rad in Vorwärtsfahrtrichtung auf der linken oder der rechten Seite des Fahrzeugs befindet. Die Drehrichtungsindikation kann beispielsweise eine Drehrichtung, insbesondere eine abgeleitete Drehrichtung, umfassen. Auch möglich ist, dass die Drehrichtungsindikation lediglich ein Ableiten der Drehrichtung ermöglicht, beispielsweise kann die Drehrichtungsindikation in diesem Fall eine Beschleunigung umfassen.

Das Kommunikationssignal kann ferner eine Drehgeschwindigkeitsindikation des Rads umfassen. Die Drehgeschwindigkeitsindikation repräsentiert die Drehgeschwindigkeit des Rads und/oder der Reifendrucksensoranordnung. Die Drehgeschwindigkeitsindikation kann die Drehgeschwindigkeit umfassen. Auch möglich ist, dass die Drehgeschwindigkeitsindikation lediglich ein Ableiten der Drehgeschwindigkeit ermöglicht, beispielsweise kann die Drehgeschwindigkeitsindikation in diesem Fall eine erfasste Beschleunigung umfassen. Beispielsweise kann die Drehgeschwindigkeitsindikation einen Beschleunigungswert, insbesondere senkrecht zur Rotationsachse, umfassen.

Eine Drehwinkelindikation und/oder Drehgeschwindigkeitsindikation kann beispielsweise als ein Index zu einer Tabelle übermittelt werden. Beispielsweise kann lediglich eine begrenzte Anzahl von verschiedenen repräsentierten Werten vorgesehen sein, beispielsweise bis zu 2, 4, 8, 16, 32, 64, 128, 256, 512 oder 1024 Werte. Die jeweilige Indikation kann in diesem Falle beispielsweise als eine Abfolge von Bits repräsentiert werden und beispielsweise in dieser Form in dem Kommunikationssignal enthalten sein. Eine Drehrichtungsindikation kann beispielsweise durch ein einziges Bit repräsentiert werden.

Gemäß einem Ausführungsbeispiel des ersten Aspekts umfasst das Verfahren ferner das Erfassen zumindest einer Beschleunigung.

Die erfasste Beschleunigung ist insbesondere eine Beschleunigung der Reifendrucksensoranordnung. Alternativ oder zusätzlich ist die Beschleunigung eine Beschleunigung des Rads. Die Beschleunigung kann insbesondere von einem Beschleunigungssensor der Reifendrucksensoranordnung erfasst werden.

Die Beschleunigung wird insbesondere entlang einer Erfassungsachse erfasst. Die Erfassungsachse ist insbesondere relativ zu der Reifendrucksensoranordnung fixiert. Die Erfassungsachse kann beispielsweise senkrecht zur Rotationsachse (und/oder Radachse) des Rads ausgerichtet sein.

Die Beschleunigung kann kontinuierlich und/oder in vordefinierten zeitlichen Abständen erfasst werden. Beispielsweise kann die Beschleunigung in zeitlichen Abständen von zumindest 100µs, 200µs, 500µs, 1ms, 2ms, 5ms, 10ms, 50ms, 100ms, 200ms, 500ms, 1s, 2s, 5s, 10s, 30s, 1min, 2min, 5min, 10min, 20min, 30min oder 1h erfasst werden. Beispielsweise kann die Beschleunigung in zeitlichen Abständen von höchstens 100µs, 200µs, 500µs, 1ms, 2ms, 5ms, 10ms, 50ms, 100ms, 200ms, 500ms, 1s, 2s, 5s, 10s, 30s, 1min, 2min, 5min, 10min, 20min, 30min oder 1h erfasst werden.

Die zumindest eine erfasste Beschleunigung kann einen momentanen Wert der Beschleunigung entlang zumindest einer Erfassungsachse umfassen. Möglich ist ebenfalls eine Zusammenfassung mehrerer erfasster Beschleunigungswerte, beispielsweise in Form eines Mittelwerts, Medians, maximalen Werts, minimalen Werts und/oder Kombinationen hieraus. Beispielsweise kann die Beschleunigung zumindest 2, 3, 4, 5 oder mehr voneinander unabhängig erfasste Beschleunigungswerte zusammenfassen.

Mittels der Beschleunigung kann unter anderem die (z.B. momentane) Drehrichtung des Rads und/oder der Reifendrucksensoranordnung, die (z.B. momentane) Drehgeschwindigkeit des Rads und/oder der Reifendrucksensoranordnung sowie die (z.B. momentane) Drehwinkelposition des Rads und/oder der Reifendrucksensoranordnung erfasst werden.

Typischerweise umfasst die Beschleunigung eine Überlagerung der (insbesondere konstanten) Erdbeschleunigung und einer Zentrifugalbeschleunigung durch die Radrotation, insbesondere wenn die Erfassungsachse, in welcher der Beschleunigungssensor eine Beschleunigung erfasst, im Wesentlichen senkrecht zur Rotationsachse (und/oder Radachse) des Rads ausgerichtet ist. Je nach Ausrichtung der Erfassungsachse, in welcher der Beschleunigungssensor eine Beschleunigung erfasst, können auch beispielsweise Beschleunigungen entlang der Rotationsachse des Rads detektiert werden. Eine Beschleunigung kann ebenfalls Hinweise auf mechanische Interaktionen des Rads und/oder des Reifens mit seiner Umgebung umfassen. Beispielsweise kann, insbesondere bei geeigneter Anordnung der Reifendrucksensoranordnung, welche den Beschleunigungssensor umfasst (beispielsweise am Reifen selbst) ein Bodenkontakt eines Bereichs des Rads und/oder Reifens, in welchem die Reifendrucksensoranordnung angeordnet ist, basierend auf der erfassten Beschleunigung detektiert werden. Gemäß einem Ausführungsbeispiel des ersten Aspekts werden mehrere Beschleunigungen in zumindest zwei oder drei verschiedenen Erfassungsachsen erfasst.

Die zumindest zwei oder drei verschiedenen Erfassungsachsen können beispielsweise zumindest im Wesentlichen senkrecht zueinander ausgerichtet sein. Beispielsweise kann eine der zumindest zwei und/oder zwei der zumindest zwei oder drei Erfassungsachsen im Wesentlichen senkrecht zur Rotationsachse des Rads ausgerichtet sein. Die Reifendrucksensoranordnung kann in hierfür geeigneter Weise an dem Rad angeordnet sein.

Wenn zwei Achsen (beispielsweise Erfassungsachse zu Rotationsachse oder zu Radachse) zueinander im Wesentlichen senkrecht ausgerichtet sind, kann hiermit insbesondere gemeint sein, dass zwischen ihnen ein Winkel eingeschlossen ist, welcher von 90° um höchstens 1°, 2°, 5°, 10° oder 15° abweicht.

Gemäß einem Ausführungsbeispiel des ersten Aspekts basiert die Drehwinkelindikation auf der zumindest einen erfassten Beschleunigung.

Aus der zumindest einen erfassten Beschleunigung kann die Drehwinkelpositionen des Rads und/oder der Reifendrucksensoranordnung bestimmt und/oder abgeleitet werden. Durch Erfassen einer Beschleunigung kann folglich ein Hinweis auf die Drehwinkelposition erhalten werden. Die Drehwinkelindikation, welche in dem Kommunikationssignal gesendet wird, kann damit von dem Erfassen einer Beschleunigung abhängen. Die hierfür verwendete erfasste Beschleunigung kann beispielsweise im Zeitpunkt des Sendens und/oder (beispielsweise kurz) vor dem Senden erfasst werden. Beispielsweise kann zwischen dem Erfassen der Beschleunigung und dem Senden eine Zeitspanne von weniger als 100µs, 200µs, 500µs, 1ms, 2ms, 5ms, 10ms, 50ms, 100ms, 200ms, 500ms, 1s oder 2s liegen. Beispielsweise kann zwischen dem Erfassen der Beschleunigung und dem Senden stets eine vordefinierte Zeitspanne gewartet werden, wobei die vordefinierte Zeitspanne beispielsweise der Zeitdauer entspricht, die das Rad für eine oder mehrere (z.B. vollständige) Rotationen benötigt.

Die Drehwinkelindikation kann beispielsweise unter anderem auf der erfassten Beschleunigung basieren. Beispielsweise kann die Drehwinkelindikation zusätzlich auf einer Zeitinformation und/oder einer Drehrichtungsinformation und/oder einer Drehgeschwindigkeitsinformation basieren. Alternativ oder zusätzlich kann die Drehwinkelindikation eine Zeitinformation und/oder eine Drehrichtungsinformation und/oder eine Drehgeschwindigkeitsinformation umfassen. Beispielsweise kann die Drehwinkelindikation eine Zeitspanne zwischen dem Erfassen der Beschleunigung und dem Senden umfassen und/oder auf diesem basieren.

Gemäß einem Ausführungsbeispiel des ersten Aspekts
- repräsentiert die Drehwinkelindikation die zumindest eine erfasste Beschleunigung, und/oder
- repräsentiert die Drehwinkelindikation eine zumindest teilweise basierend auf der zumindest einen erfassten Beschleunigung abgeleitete Drehwinkelposition.

Die Drehwinkelindikation kann beispielsweise die zumindest eine erfasste Beschleunigung repräsentieren. In diesem Falle ist es nicht notwendig, dass die Reifendrucksensoranordnung aus der erfassten Beschleunigung eine Drehwinkelposition ableitet und/oder bestimmt. Stattdessen kann die erfasste Beschleunigung selbst übermittelt werden. Vorteilhaft hieran ist, dass weniger Verarbeitungsschritte von der Reifendrucksensoranordnung selbst ausgeführt werden müssen. Hierdurch bleibt der Energiebedarf der Reifendrucksensoranordnung gering, und eine maximale Betriebszeit der Reifendrucksensoranordnung kann bei einer gegebenen Menge von verfügbarer Energie (beispielsweise eines elektrischen Energiespeichers der Reifendrucksensoranordnung) besonders lang ausfallen.

Alternativ oder zusätzlich repräsentiert die Drehwinkelindikation eine, zumindest teilweise basierend auf der zumindest einen erfassten Beschleunigung abgeleitete, Drehwinkelposition. In diesem Falle kann die Reifendrucksensoranordnung dazu eingerichtet sein, die Drehrichtungspositionen aus der erfassten Beschleunigung zu bestimmen und/oder abzuleiten. Vorteilhaft an dieser Ausgestaltung kann insbesondere sein, dass die abgeleitete und/oder bestimmte Drehwinkelposition in kompakter Form gesendet werden kann. Während beispielsweise die Beschleunigung in mehreren Erfassungsachsen mit hinreichender Genauigkeit (und damit einhergehender Datenmenge) gesendet werden muss, kann die abgeleitete oder bestimmte Drehwinkelposition als ein einzelner skalarer Wert gesendet werden. Hierdurch verringert sich der Kommunikationsaufwand, was mit einer Energieersparnis für die Reifendrucksensoranordnung aber auch einer kürzeren Sendezeit einhergeht.

Gemäß einem Ausführungsbeispiel des ersten Aspekts umfasst das Verfahren ferner Ableiten und/oder Bestimmen einer Drehwinkelposition des Rads, einer Drehrichtung des Rads und/oder einer Drehgeschwindigkeit des Rads aus der Drehwinkelindikation und/oder aus der zumindest einen erfassten Beschleunigung.

Die Drehwinkelposition des Rads, einer Drehrichtung des Rads und/oder einer Drehgeschwindigkeit des Rads kann insbesondere jeweils mit der Drehwinkelposition der Reifendrucksensoranordnung, einer Drehrichtung der Reifendrucksensoranordnung und/oder einer Drehgeschwindigkeit der Reifendrucksensoranordnung übereinstimmen.

Die zumindest eine erfasste Beschleunigung, insbesondere, soweit diese senkrecht zur Rotationsachse des Rads erfasst wird, ist zumindest teilweise von der Erdbeschleunigung abhängig. Eine Drehwinkelposition kann damit aus der zumindest einen erfassten Beschleunigung abgeleitet und/oder bestimmt werden. Beispielsweise kann ausgehend von dem Betrag und dem Vorzeichen der zumindest einen erfassten Beschleunigung abgeleitet werden, welcher Winkel zwischen der Erfassungsachse, in welcher die zumindest eine erfasste Beschleunigung erfasst wird, und einem Erdbeschleunigungsvektor, welcher zum Zentrum des Planeten ausgerichtet ist, auf welchem sich das Fahrzeug befindet, bestimmt werden. Dieser Winkel (beispielsweise plus einem konstanten Offset-Winkel) kann als die Drehwinkelposition betrachtet werden.

Falls sich das Rad in Rotation befindet, ist die Erdbeschleunigung überlagert von einer Zentrifugalbeschleunigung. Falls die Erfassungsachse, in welcher der Beschleunigungssensor die zumindest eine erfasste Beschleunigung erfasst, senkrecht zur Rotationsachse des Rads ausgerichtet ist, ist die erfasste Zentrifugalbeschleunigung bei konstanter Geschwindigkeit (z.B. Drehgeschwindigkeit und/oder Fahrzeuggeschwindigkeit)in etwa konstant über die Zeit. Somit kann, in einer einfachen Ausgestaltung, von der erfassten Beschleunigung die konstante Zentrifugalbeschleunigung abgezogen werden und somit die von der Erdbeschleunigung hervorgerufene Komponente von der zumindest einen erfassten Beschleunigung isoliert werden. Beispielsweise kann die Zentrifugalbeschleunigung als der Mittelwert der zumindest einen erfassten Beschleunigung über eine Umdrehung des Rads und/oder über eine vordefinierte Zeitspanne bestimmt werden.

Zur Bestimmung und/oder Erfassung der Drehwinkelposition aus der zumindest einen erfassten Beschleunigung können zumindest zwei voneinander verschiedene Erfassungsachsen notwendig sein, in welchen die Beschleunigung erfasst wird. Die beiden Erfassungsachsen sind hierbei zumindest teilweise senkrecht zur Rotationsachse des Rads ausgerichtet und in Projektion entlang der Rotationsachse voneinander verschieden. Alternativ ist es möglich, die Beschleunigungen lediglich in einer Erfassungsachse senkrecht zur Rotationsachse zu erfassen und hieraus die Drehwinkelposition abzuleiten. Beispielsweise kann hierbei, neben einer skalaren Beschleunigung, eine Drehrichtungsinformationen des Rads hinzugenommen werden, um die Drehwinkelposition abzuleiten und/oder zu bestimmen.
Auch die Drehrichtung des Rads und/oder der Reifendrucksensoranordnung kann aus der zumindest einen erfassten Beschleunigung abgeleitet und/oder bestimmt werden. Hierbei kann ebenfalls die von der Erdbeschleunigung verursachte Beschleunigungskomponente in einer Erfassungsachse und/oder insbesondere in zwei Erfassungsachsen, in welchen die Beschleunigung erfasst wird, betrachtet werden. Die zwei Erfassungsachsen können beispielsweise im Wesentlichen senkrecht zueinander und jeweils im Wesentlichen senkrecht zur Rotationsachse ausgerichtet sein. Die Drehrichtung kann beispielsweise unter Kenntnis eines Winkels zwischen den zumindest zwei Erfassungsachsen, in welchen die Beschleunigung erfasst wird, abgeleitet und/oder bestimmt werden.

Schließlich kann auch eine Drehgeschwindigkeit des Rads und/oder der Reifendrucksensoranordnung basierend auf der zumindest einen erfassten Beschleunigung abgeleitet und/oder bestimmt werden. Auch die Geschwindigkeit des Fahrzeugs kann auf diese Art, beispielsweise unter Berücksichtigung des Reifenumfangs, abgeleitet und/oder bestimmt werden. Hierbei kann beispielsweise, zusätzlich zu der Beschleunigung, eine Zeitinformation herangezogen werden. Beispielsweise kann die Zeitspanne zwischen zwei Ereignissen gemessen werden, wobei die Ereignisse jeweils einmal pro Umdrehung auftreten. Das Ereignis kann beispielsweise ein aus der Beschleunigung abgeleitete Kontakt eines Bereichs, in welchem die Reifendrucksensoranordnung angeordnet ist, mit dem Boden umfassen. Beispielsweise kann das Ereignis in diesem Fall eine Erschütterung sein. Auch kann als das Ereignis das Erreichen eines betragsmäßig maximalen (beispielsweise positiven und/oder negativen) Beschleunigungswerts angenommen werden. Die Drehgeschwindigkeit kann insbesondere unter Heranziehung einer erfassten Beschleunigung entlang einer einzigen Erfassungsachse bestimmt und/oder abgeleitet werden.

Gemäß einem zweiten Aspekt der Erfindung wird eine Reifendrucksensoranordnung für Fahrzeuge, insbesondere Nutzfahrzeuge, vorgeschlagen, umfassend einen Drucksensor und Mittel, die dazu eingerichtet sind, das Verfahren gemäß dem ersten Aspekt auszuführen und/oder zu steuern.

Die Reifendrucksensoranordnung gemäß dem zweiten Aspekt ist insbesondere dazu geeignet, an dem Rad eines Fahrzeugs angeordnet, insbesondere an dem Rad befestigt, zu werden. Beispielsweise kann die Reifendrucksensoranordnung ein Befestigungsmittel umfassen und/oder dazu eingerichtet sein, mittels eines Befestigungsmittels an dem Rad befestigt zu werden. Beispielsweise können die Befestigungsmittel an einem Gehäuse der Reifendrucksensoranordnung angeordnet sein.

Beispielsweise kann die Reifendrucksensoranordnung an der Felge des Rads angeordnet werden, beispielsweise mit einem Spanngurt um die Felge gespannt werden. Auch eignet sich die Umgebung eines Ventils des Rads zur Befestigung der Reifendrucksensoranordnung. Die Reifendrucksensoranordnungen kann beispielsweise im Innenraum des Reifens in der Nähe des Ventils, beispielsweise mit dem Ventil verbunden, angeordnet sein. Alternativ kann die Reifendrucksensoranordnung außen an der Felge im Bereich des Ventils angeordnet sein. In diesem Fall muss eine fluidische Verbindung zwischen dem Reifendrucksensor und einem Innenraum des Ventils, welcher mit dem Innenraum des Reifens verbunden ist, vorgesehen werden. Eine fluidische Verbindung ist insbesondere eine gasdurchlässige Verbindung, welche einen Druckausgleich zwischen den durch die fluidische Verbindung verbundenen Volumina zulässt. Auch möglich ist es, die Reifendrucksensoranordnung mit einem flexiblen Befestigungselement, beispielsweise einem Band, lose mit der Felge und/oder dem Reifen zu verbinden, sodass die Reifendrucksensoranordnung bei Rotation des Rads durch die auf die Reifendrucksensoranordnung einwirkende Zentrifugalkraft in den Zwischenraum zwischen Reifen und Felge gehoben wird, und durch das flexible Befestigungselement gehalten wird. Alternativ oder zusätzlich kann die Reifendrucksensoranordnung an dem Reifen angeordnet sein. Alternativ oder zusätzlich kann die Reifendrucksensoranordnung an einem Ventil des Reifens angeordnet sein. Beispielsweise kann die Reifendrucksensoranordnung an eine Innenwand des Reifens anvulkanisiert werden.

Eine Anordnung des Reifendrucksensors, welche radial zur Rotationsachse des Rads besonders weit außen liegt (beispielsweise am Reifen selbst), kann den Vorteil haben, dass sich die Drehwinkelposition der Reifendrucksensoranordnung mit Variation der Drehwinkelposition besonders stark verändert. Hierdurch kann eine besonders starke Veränderung der empfangenen Signalstärke mit Änderung der Drehwinkelposition erreicht werden, was für die Zuordnung zwischen Reifendrucksensoranordnung und Radposition besonders vorteilhaft sein kann.

Die Reifendrucksensoranordnung umfasst einen Drucksensor. Der Drucksensor kann beispielsweise kapazitiv, induktiv, piezoelektrisch und/oder piezoresistiv aufgebaut sein. Der Drucksensor ist fluidisch mit einem Innenraum des Reifens verbunden. Beispielsweise ist der Drucksensor an einem Außenbereich der Reifendrucksensoranordnung angebracht. Auch möglich ist, ein Gehäuse der Reifendrucksensoranordnung zumindest mit einer Öffnung zu versehen, mittels derer ein Druckausgleich zwischen einem Innenraum des Gehäuses und dem Innenraum des Reifens hergestellt werden kann.

Die Reifendrucksensoranordnung kann insbesondere zumindest zwei oder mehr Drucksensoren umfassen. Hierdurch kann eine Redundanz geschaffen werden, was eine Ausfallwahrscheinlichkeit der Reifendrucksensoranordnung reduziert. Gleichzeitig kann die Messgenauigkeit erhöht werden.

Die Mittel zur Ausführung des Verfahrens gemäß des ersten Aspekts können beispielsweise Rechenmittel umfassen. Rechenmittel können beispielsweise zumindest einen Prozessor, einen Speicher, einen Microcontroller, ein Field Programmable Gate Array (FPGA), einen Applikationsspezifischen Integrierten Schaltkreis (ASIC) und/oder Kombinationen hieraus umfassen. Beispielsweise kann ein Speicher der Rechenmittel Instruktionen umfassen, welche, wenn sie von den zumindest einen Rechenmittel ausgeführt werden, die Reifendrucksensoranordnung dazu veranlassen, das Verfahren gemäß dem ersten Aspekt auszuführen und/oder zu steuern. Beispielsweise können hierfür funktionale Einheiten vorgesehen sein, welche die Schritte des Verfahrens steuern und/oder ausführen. Eine funktionale Einheit kann beispielsweise mit Instruktionen korrespondieren, welche die Steuerung und/oder Ausführung der jeweiligen Schritte des Verfahrens bewirken. Alternativ oder zusätzlich kann eine funktionale Einheit einer Verschaltung eines programmierten FPGA, ein Teilbereich eines ASIC und/oder Kombinationen hieraus sein.

Die Reifendrucksensoranordnung kann ferner zumindest einen Energiespeicher umfassen, beispielsweise eine Batterie und/oder einen Akkumulator. Beispielsweise kann der Energiespeicher wiederaufladbar sein.

Die Reifendrucksensoranordnung kann ferner ein Zeiterfassungsmittel umfassen, welches die Erfassung verstrichener Zeitspannen erlaubt. Beispielsweise kann dies ein Timer (beispielsweise eine Microcontrollers) sein, beispielsweise basierend auf einem Quarz.

Die Reifendrucksensoranordnung ist insbesondere dazu eingerichtet, den Reifeninnendruck des Rades zu erfassen, an welchem die Reifendrucksensoranordnung angeordnet ist.

Gemäß einem Ausführungsbeispiel des zweiten Aspekts
- ist der Drucksensor für das Erfassen des Innendrucks eines Reifens eines Rads eingerichtet.

Der Drucksensor kann, in den im Hinblick auf das Verfahren gemäß dem ersten Aspekt offenbarten Vorgehensweisen, den Innendruck eines Reifens eines Rads erfassen. Insbesondere kann der Drucksensor den Innendruck des Reifens erfassen, an dem die Reifendrucksensoranordnung angeordnet ist.

Gemäß einem Ausführungsbeispiel des zweiten Aspekts
- umfasst die Reifendrucksensoranordnung ein Kommunikationsmittel, wobei das Kommunikationsmittel für das Senden des Kommunikationssignals eingerichtet ist.

Das Kommunikationsmittel kann beispielsweise mit den Mitteln, beispielsweise mit einem Rechenmittel der Reifendrucksensoranordnung verbunden sein, beispielsweise durch eine Kommunikationsverbindung, insbesondere durch eine drahtgebundene Kommunikationsverbindung.

Das Kommunikationsmittel ist insbesondere ein drahtloses Kommunikationsmittel. Das Kommunikationsmittel kann beispielsweise zumindest eine Antenne umfassen, über welche das Kommunikationsmittel elektromagnetische Wellen aussenden kann. Das Kommunikationsmittel kann beispielsweise dazu eingerichtet sein, auf einer Trägerfrequenz ein Signal (beispielsweise das Kommunikationssignal) aufzumodulieren. Beispielsweise kann die Trägerfrequenz im Bereich einiger hundert MHz liegen, beispielsweise zwischen 100 und 800 MHz, beispielsweise 433 MHz. Beispielsweise ist das Kommunikationsmittel dazu eingerichtet, gemäß einem drahtlosen Kommunikationsstandard Nachrichten auszusenden. Beispielsweise kann dieser Kommunikationsstandard ein Bluetooth Standard sein (https://www.bluetooth.com), Zigbee, ein anderer Kommunikationsstandard und/oder Kombinationen hieraus. Alternativ oder zusätzlich kann das Kommunikationsmittel dazu eingerichtet sein, eine paketbasierte Übermittlung von Daten zu ermöglichen.

Beispielsweise kann das das Kommunikationsmittel zu einem drahtlosen und unidirektionalen Senden eingerichtet sein. Beispielsweise kann das Kommunikationsmittel dazu eingerichtet sein, das Kommunikationssignal in Form eines Broadcasts aussenden. Das Kommunikationssignal und/oder das Senden des Kommunikationssignals kann hierbei nicht spezifisch für einen Empfänger sein, sondern unspezifisch. Das Senden kann unabhängig von einer Rückmeldung zu der Sendung von einem Empfänger sein. Alternativ kann das Kommunikationsmittel zu einer bidirektionalen Kommunikation eingerichtet sein. In diesem Fall ist das Kommunikationsmittel in der Lage, sowohl zu senden (insbesondere das Kommunikationssignal), als auch zu empfangen, beispielsweise eine Empfangsbestätigung des Empfängers zu dem ausgesendeten Kommunikationssignal.

Gemäß einem Ausführungsbeispiel des zweiten Aspekts umfasst die Reifendrucksensoranordnung
- einen Beschleunigungssensor, wobei der Beschleunigungssensor dazu eingerichtet ist, die zumindest eine Beschleunigung zu erfassen.

Die in Hinblick auf das Verfahren gemäß des ersten Aspekts offenbarten Erfassungsweisen sind hiermit ebenfalls für die Reifendrucksensoranordnung offenbart.

Der Beschleunigungssensor ist insbesondere dazu eingerichtet, eine, zwei oder drei Beschleunigungen zu erfassen, insbesondere in jeweils voneinander verschiedenen Erfassungsachsen.

Beispielsweise kann der Beschleunigungssensor sich in zumindest zwei einzelne Unterbeschleunigungssensoren aufteilen. Ein erster Unterbeschleunigungssensor kann beispielsweise in einer oder zwei oder drei Erfassungsachsen eine Beschleunigung erfassen. Beispielsweise kann der erste Unterbeschleunigungssensor mit der Reifendrucksensoranordnung integriert sein und eine erste Beschleunigung entlang einer ersten Erfassungsachse erfassen, während darüber hinaus ein zweiter Unterbeschleunigungssensor getrennt von der Reifendrucksensoranordnung vorgesehen ist. Der zweite Unterbeschleunigungssensor kann dazu eingerichtet sein, eine Beschleunigung in mindestens einer weiteren Erfassungsachse, welche sich von der ersten Erfassungsachse unterscheidet, zu erfassen. Auch möglich ist es, dass der zweite Unterbeschleunigungssensor zwei und/oder drei Beschleunigungen erfasst. Durch das Vorsehen eines weiteren Unterbeschleunigungssensors, zusätzlich zu einem bereits in dem Drucksensor integrierten Unterbeschleunigungssensor, kann besonders platzsparend und günstig eine weitere Erfassungsachse, in welcher eine Beschleunigung erfasst wird, bereitgestellt werden wodurch sich die Drehrichtung und die Drehwinkelposition ableiten und/oder bestimmen lässt.

Die Ausrichtung von zumindest zwei Erfassungsachsen, in welchen eine jeweilige Beschleunigung erfasst wird, ist insbesondere so gewählt, dass diese in einer Einbauposition der Reifendrucksensoranordnung im Wesentlichen senkrecht zueinander und senkrecht zur Rotationsachse des Rads ausgerichtet sind.

Gemäß einem Ausführungsbeispiel des zweiten Aspekts umfasst die Reifendrucksensoranordnung ferner
- ein Ableitungs- und/oder Bestimmungsmittel, wobei das Ableitungs- und/oder Bestimmungsmittel für die Ableitung der Drehwinkelposition, Drehrichtung und/oder Drehgeschwindigkeit eingerichtet ist.

Das Ableitungs- und/oder Bestimmungsmittel kann insbesondere ein Rechenmittel sein. Das Rechenmittel kann beispielsweise zumindest einen Prozessor, einen Speicher, einen Microcontroller, ein Field Programmable Gate Array (FPGA), einen Applikationsspezifischen Integrierten Schaltkreis (ASIC) und/oder Kombinationen hieraus umfassen. Beispielsweise kann ein Speicher der Mittel Instruktionen umfassen, welche, wenn sie von den zumindest einen Rechenmittel ausgeführt werden, die Reifendrucksensoranordnung dazu veranlassen, die Drehwinkelposition, die Drehrichtung und/oder die Drehgeschwindigkeit abzuleiten und/oder zu bestimmen. Beispielsweise kann das Ableiten und/oder Bestimmen auf der zumindest einen erfassten Beschleunigung basieren.

Die Ableitung und/oder Bestimmung der jeweiligen Größe kann, wie in der in Hinblick auf den ersten Aspekt offenbarten Art und Weise, erfolgen.

Gemäß einem dritten Aspekt der Erfindung wird ein Verfahren zur Reifendrucküberwachung eines Fahrzeugs, insbesondere Nutzfahrzeugs, ausgeführt durch eine Vorrichtung, vorgeschlagen, umfassend
- Empfangen mehrerer Kommunikationssignale, jeweils umfassend eine jeweilige Reifendruckindikation eines Reifens eines Rads und eine jeweilige Drehwinkelindikation eines Rads, von einer Reifendrucksensoranordnung, und
- Erfassen der jeweiligen Signalstärke des jeweils empfangenen Kommunikationssignals,
- Ableiten und/oder Bestimmen eines Signalstärkeprofils der Reifendrucksensoranordnung, zumindest teilweise basierend auf den von den empfangenen Kommunikationssignalen umfassten Drehwinkelindikationen sowie den erfassten Signalstärken,
- Zuordnen einer Radposition zu der Reifendrucksensoranordnung, zumindest basierend auf dem Signalstärkeprofil.

Die Vorrichtung kann beispielsweise eine Steuerungseinheit eines (des) Fahrzeugs sein, beispielsweise eine Telematikeinheit (CTU).

Das vorgeschlagene Verfahren umfasst das Empfangen mehrerer Kommunikationssignale, z.B. durch die Vorrichtung. Die Kommunikationssignale werden insbesondere zeitlich nacheinander empfangen. Beispielsweise werden die Kommunikationssignale von einem Kommunikationsmittel der Vorrichtung empfangen. Die Kommunikationssignale können beispielsweise den Kommunikationssignalen gemäß dem ersten und zweiten Aspekt der Erfindung ausgestaltet sein. Insbesondere können die Kommunikationssignale von einer Reifendrucksensoranordnung empfangen werden, insbesondere einer Reifendrucksensoranordnung gemäß dem zweiten Aspekt.

Beispielsweise können jeweils mehrere Kommunikationssignale von zumindest zwei oder mehr Reifendrucksensoranordnungen empfangen werden.

Zu einem jeweiligen empfangenen Kommunikationssignal wird eine jeweilige Signalstärke bestimmt. Beispielsweise kann die Signalstärke eine empfangene Leistung, ein Signal-zu-Rausch Verhältnis (SNR), einen Received Signal Strength Indicator (RSSI) und/oder Kombinationen hieraus umfassen.

Das Verfahren umfasst ferner ein Ableiten und/oder Bestimmen eines Signalstärkeprofils. Das Ableiten und/oder Bestimmen basiert zumindest teilweise auf den Drehwinkelindikationen, welche in den empfangenen Kommunikationssignalen enthalten sind. Ferner basiert das Ableiten und/oder Bestimmen zumindest teilweise auf den erfassten Signalstärken.

Für eine vordefinierte Reifendrucksensoranordnung kann damit eine Beziehung zwischen der erfassten Signalstärke und der Drehwinkelposition des Rads, insbesondere zum Zeitpunkt des Absendens (also dem Sendedrehwinkel), konstruiert, abgeleitet und/oder bestimmt werden. Diese Beziehung ist das Signalstärkeprofil (z.B. der Reifendrucksensoranordnung). Es wurde erkannt, dass ein Signalstärkeprofil charakteristisch für eine spezifische Radposition sein kann, in welcher die Reifendrucksensoranordnung angeordnet ist und/oder an der das Rad, an welchem die Reifendrucksensoranordnung angeordnet ist, angeordnet ist.

Ein Signalstärkeprofil kann beispielsweise für eine begrenzte Anzahl von (insbesondere äquidistanten) Drehwinkelpositionen bestimmt werden. Beispielsweise kann ein Signalstärkeprofil für N Drehwinkelpositionen 0, 360°/N, 2*360°/N, ..., (N-1)*360°/N angelegt werden.

Beispielsweise wird ein Signalstärkeprofil basierend auf zumindest 5, 10, 15, 20, 30, 40, 50, 100, 200, 500, 1000, 2000, 5000 oder 10000 empfangenen Kommunikationssignalen abgeleitet und/oder bestimmt.

Weiterhin umfasst das Verfahren das Zuordnen einer Radposition zu der Reifendrucksensoranordnung (z.B. von der die mehreren Kommunikationssignale empfangen wurden), zumindest basierend auf dem abgeleiteten und/oder bestimmten Signalstärkeprofil.

Da das Signalstärkeprofil charakteristisch für eine vordefinierte Radposition ist, kann eine Zuordnung zwischen der Reifendrucksensoranordnung, für welche das Signalstärkeprofil abgeleitet und/oder bestimmt wurde, und einer Radposition basierend auf dem Signalstärkeprofil vorgenommen werden. Beispielsweise kann hierfür ein Modell des maschinellen Lernens trainiert werden, welches Signalstärkeprofile als Eingangsgrößen akzeptiert und diesen die wahrscheinlichste Radposition als Ausgangsgröße zuordnet. Das Modell des maschinellen Lernens kann beispielsweise eine Support Vektor Maschine (SVM), ein neuronales Netz (z.B. ein Perzeptron oder tiefes neuronales Netzwerk), ein k-Nearest-Neighbor (kNN) Modell und/oder Kombinationen hieraus sein.

Beispielsweise kann zumindest eine der Reifendrucksensoranordnungen, von denen Kommunikationssignale empfangen wurden, einer Radposition zugeordnet werden. Alternativ können alle Reifendrucksensoranordnungen, von denen Kommunikationssignale empfangen wurden, jeweils einer Radposition zugeordnet werden.

Beispielsweise kann pro Reifendrucksensoranordnung eine Mindestanzahl von empfangenen Kommunikationssignalen erfasst werden, bis eine Zuordnung vorgenommen wird. Die Mindestanzahl kann beispielsweise 10, 50, 100, 500, 1000 oder mehr empfangene Kommunikationssignale betragen.

Gemäß einem Ausführungsbeispiel des dritten Aspekts
- basiert das Zuordnen zumindest teilweise auf einem Vergleich zwischen dem bestimmten Signalstärkeprofil und zumindest einem Referenzsignalstärkeprofil für zumindest eine Radposition.

Eine weitere Möglichkeit, eine Zuordnung zwischen Radposition und Reifendrucksensoranordnung vorzunehmen, bedient sich eines Referenzsignalstärkeprofils. Ein Referenzsignalstärkeprofil repräsentiert hierbei beispielsweise ein erwartetes Signalstärkeprofil für eine vordefinierte Radposition. Einem Referenzsignalstärkeprofil ist damit eine Radposition zugeordnet. Das Referenzsignalstärkeprofil ist beispielsweise empirisch bestimmt, beispielsweise basierend auf einer Vermessung eines bestimmten Fahrzeugs und/oder Fahrzeugmodells. Auch kann das Referenzsignalstärkeprofil beispielsweise modellbasiert, beispielsweise basierend auf einer Simulation der Übertragungscharakteristik zwischen einer Reifendrucksensoranordnung an einem Rad und einem Empfänger (z.B. der Vorrichtung) für verschiedene Drehwinkelpositionen, bestimmt werden.

Beispielsweise kann ein abgeleitetes und/oder bestimmtes Signalstärkeprofil für eine vordefinierte Reifendrucksensoranordnung mit zumindest einem oder mehreren Referenzsignalstärkeprofilen verglichen werden. Das zu dem bestimmten Signalstärkeprofil ähnlichste Referenzsignalstärkeprofil kann ausgewählt werden und die ihm zugeordnete Radposition kann der Reifendrucksensoranordnung zugeordnet werden. Alternativ oder zusätzlich kann eine vordefinierte minimale Ähnlichkeit vorausgesetzt werden, ab der eine Zuordnung vorgenommen wird.

Ein Vergleich zwischen einem Signalstärkeprofil und einem Referenzsignalstärkeprofil kann beispielsweise mittels einer Korrelation bestimmt werden. Die Korrelation kann ein Maß für die Ähnlichkeit zwischen Signalstärkeprofil und Referenzsignalstärkeprofil sein.

Sowohl das Signalstärkeprofil als auch das Referenzsignalstärkeprofil können Nullstellen aufweisen, welche Drehwinkelpositionen und/oder Drehwinkelbereichen entsprechen, an denen (z.B. trotz Sendens) kein Signal an einem Empfänger empfangen wird. Darüber hinaus können in dem Signalstärkeprofil und/oder dem Referenzsignalstärkeprofil Charakteristika bestimmt werden, beispielsweise Maxima und/oder Minima (z.B. deren jeweilige Signalstärkewerte und/oder Drehwinkelpositionen), Mittelwerte, Mediane, Standardabweichungen, Varianzen und/oder Kombinationen hieraus. Diese können für einen Vergleich zweier Signalstärkeprofile ebenfalls herangezogen werden.

Der Vergleich kann sich auf Wertebereiche von Drehwinkelpositionen beschränken, beispielsweise auf solche Drehwinkelpositionen, an denen das Signalstärkeprofil (und/oder das Referenzsignalstärkeprofil) keine Nullstelle(n) aufweist.

Für einen Vergleich zwischen Signalstärkeprofil und Referenzsignalstärkeprofil kann beispielsweise eine Normalisierung der Amplitude vorgenommen werden.

Ein (Referenz-)Signalstärkeprofil kann für eine gegebene Drehwinkelposition eine einzige Signalstärke angeben. Auch kann das (Referenz-)Signalstärkeprofil mehrere (beispielsweise 2, 3, 4 oder mehr) Signalstärken pro Drehwinkelposition umfassen. Dies kann beispielsweise der Fall sein, wenn mehrere Empfänger das Kommunikationssignal empfangen und/oder ein Empfänger mehrere Antennen umfasst, die jeweils das Kommunikationssignal erfassen.

Die Signalstärke des (Referenz-) Signalstärkeprofils kann beispielsweise eine empfangene Leistung, ein Signal-zu-Rausch Verhältnis (SNR), ein Received Signal Strength Indicator (RSSI) und/oder Kombinationen hieraus umfassen.

Gemäß einem Ausführungsbeispiel des dritten Aspekts
- umfasst das Kommunikationssignal ferner eine Identifikation der Reifendrucksensoranordnung, und/oder umfasst das Kommunikationssignal ferner eine Drehrichtungsindikation des Rads, und/oder umfasst das Kommunikationssignal ferner eine Drehgeschwindigkeitsindikation des Rads.

Das in Hinblick auf den ersten und zweiten Aspekt offenbarte gilt gleichermaßen für den dritten Aspekt.

Beispielsweise kann die Identifikation genutzt werden, um für eine jeweilige Reifendrucksensoranordnung, von der im Empfänger Kommunikationssignale empfangen werden, ein Signalstärkeprofil zu erstellen und eine eindeutige Zuordnung zwischen Reifendrucksensoranordnung und Radposition zu erreichen.

Beispielsweise kann das Ableiten und/oder Bestimmen des Signalstärkeprofils und/oder das Empfangen des Kommunikationssignals abhängig von der Drehgeschwindigkeitsindikation sein, beispielsweise nur bei Drehgeschwindigkeiten oberhalb einer vordefinierten Mindestdrehgeschwindigkeit durchgeführt werden. Im Stillstand könnten sich noch andere Fahrzeuge mit Reifendrucksensoranordnungen in der Nähe des Fahrzeugs befinden, deren Kommunikationssignale ebenfalls von der Vorrichtung empfangen werden. Fehlzuordnungen oder zumindest vermeidbare Zuordnungsversuche können die Folge sein. Oberhalb der vordefinierten Mindestdrehgeschwindigkeit ist dieses Risiko geringer.

Gemäß einem Ausführungsbeispiel des dritten Aspekts
- basiert das Zuordnen zumindest teilweise auf der empfangenen Drehrichtungsindikation und/oder auf einer vordefinierten Radposition mit einer ABS-Sensorik.

Beispielsweise kann das Zuordnen basierend auf der Drehrichtungsindikation zunächst zwischen Reifendrucksensoranordnungen auf der in Vorwärtsfahrtrichtung rechten und Reifendrucksensoranordnungen auf der linken Seite des Fahrzeugs unterscheiden. Erst die genaue Zuordnung zu den Radpositionen (z.B. für eine gegebene der beiden Fahrzeugseiten) kann dann das Signalstärkeprofil herangezogen werden. Hierdurch wird die Anzahl der potentiellen Radpositionen für eine gegebene Reifendrucksensoranordnung verringert und die Zuordnungsqualität erhöht.

Auch kann die Zuordnung zumindest teilweise auf einer Anti Blockier System (ABS)-Sensorik basieren. Beispielswiese kann an zumindest einem Rad des Fahrzeugs eine ABS-Sensorik vorgesehen sein. Die zugehörige Radposition kann vordefiniert und bekannt sein, sodass die Zuordnung auf dieser Information basieren kann.

Gemäß einem Ausführungsbeispiel des dritten Aspekts
- basiert das Bestimmen des Signalstärkeprofils zumindest teilweise auf einer von einer ABS-Sensorik erfassten Drehwinkelposition, und/oder
- ist das Zuordnen auf Radpositionen beschränkt, welche frei von einer ABS-Sensorik sind, und/oder
- basiert das Zuordnen zwischen einer Radposition mit einer ABS-Sensorik und einer Reifendrucksensoranordnung zumindest teilweise auf einer zeitlichen Änderung des bestimmten Signalstärkeprofils, wobei das Signalstärkeprofil zumindest teilweise auf einer von der ABS-Sensorik erfassten Drehwinkelposition des Reifens basiert.

Beispielsweise kann das Verfahren das Zuordnen auf Radpositionen beschränken, an denen keine ABS-Sensorik vorliegt. Zu diesen Radpositionen können anderweitig Reifendrucksensoranordnung zugeordnet werden (z.B. per ABS-Sensorik).

Gemäß einem Ausführungsbeispiel des dritten Aspekts umfasst das Verfahren
- das Ableiten und/oder das Bestimmen einer Drehwinkelposition, Drehrichtung und/oder Drehgeschwindigkeit aus der empfangenen Drehwinkelindikation.

Die diesbezügliche Offenbarung in Hinblick auf den ersten und zweiten Aspekt gilt gleichermaßen für den dritten Aspekt.

Gemäß einem Ausführungsbeispiel des dritten Aspekts
- entspricht das Signalstärkeprofil und/oder das Referenzsignalstärkeprofil einer Verteilung einer Signalstärke über zumindest einen Teil der möglichen Drehwinkelpositionen eines Reifens, wobei die Signalstärke die Stärke eines von einer Reifendrucksensoranordnung übermittelten und der Vorrichtung empfangenen Signals entspricht.

Die möglichen Drehwinkelpositionen umfassen insbesondere (z.B. alle) möglichen Drehwinkel, die das Rad einnehmen kann, beispielsweise insgesamt 360°. Die Offenbarung, insbesondere bezüglich Signalstärkeprofilen und Signalstärke, in Hinblick auf den ersten und zweiten Aspekt, gilt gleichermaßen für den dritten Aspekt.

Gemäß einem Ausführungsbeispiel des dritten Aspekts
- ist das Referenzsignalstärkeprofil für eine Radposition vordefiniert und/oder
- ist das Referenzsignalstärkeprofil empirisch bestimmt, insbesondere zumindest teilweise basierend auf der Beschleunigung und/oder auf einem Winkelmesser, und/oder
- ist das Referenzsignalstärkeprofil modellbasiert, insbesondere basierend auf einer Simulation bestimmt und/oder
- basiert das Referenzsignalstärkeprofil auf einem physikalischen Übertragungskanal, insbesondere drahtlosen physikalischen Übertragungskanal, zwischen der Reifendrucksensoranordnung und der Vorrichtung basiert.

Das Referenzsignalstärkeprofil kann für eine Radposition vordefiniert sein. Beispielsweise kann für zumindest eine, eine Untermenge oder alle Radpositionen des Fahrzeugs ein Referenzsignalstärkeprofil vordefiniert sein.

Das Referenzsignalstärkeprofil kann beispielsweise auch für eine bestimmte Reifendrucksensoranordnung und/oder eine bestimmte Befestigungsmethode der Reifendrucksensoranordnung am Rad vordefiniert sein.

Das Referenzsignalstärkeprofil kann beispielsweise empirisch bestimmt sein. Beispielsweise kann ein bestimmtes Fahrzeug und/oder ein bestimmtes Fahrzeugmodell, beispielswiese mit einer vordefinierten Ausstattung, zur Erstellung eines Referenzsignalstärkeprofils (beispielsweise für eine bestimmte Radposition) vermessen werden. Hierfür kann beispielsweise ein jeweiliges Rad des Fahrzeugs (z.B. im Stand und/oder im Fahren) in bekannte Drehwinkelpositionen gedreht werden, zu denen eine jeweilige empfangene Signalstärke an der Vorrichtung bestimmt wird. Beispielsweise können die Drehwinkelpositionen hierbei gezielt angesteuert werden, beispielsweise auf (z.B. diskrete) Drehwinkelpositionen, für welche ein Referenzsignalstärkeprofil angelegt werden soll. Auch kann das jeweilige zu vermessende Rad an nicht näher bestimmte Drehwinkelpositionen gedreht werden (z.B. kontinuierlich, z.B. mit einer konstanten, niedrigen Drehgeschwindigkeit im Bereich 1 U/min), welche erst anschließend durch eine Messung bestimmt werden.

Die jeweilige Drehwinkelposition kann beispielsweise basierend auf dem Beschleunigungssensor der Reifendrucksensoranordnung bestimmt werden. Auch kann das Fahrzeug beispielsweise auf einem Prüfstand mit einem Winkelmesser, insbesondere einem Drehgeber, vermessen werden, sodass der Drehwinkelmesser die Drehwinkelposition des Rads angibt. Der Drehwinkelmesser kann auch beispielsweise einen ABS Sensor umfassen oder ein Teil davon sein sein.

Das Referenzsignalstärkeprofil kann zusätzlich oder alternativ modellbasiert bestimmt sein. Beispielsweise kann eine Simulation genutzt werden, um das Referenzsignalstärkeprofil zu bestimmen. Die Simulation kann beispielsweise eine Propagation von elektromagnetischen Wellen auf einer Signalstrecke zwischen der Reifendrucksensoranordnung und der Vorrichtung betreffen. Die Simulation kann beispielsweise Transmission, Absorption, Reflektion, sowie Beugung, Brechung, weitere physikalischen Phänomene und/oder Kombinationen hieraus der von der Reifendrucksensoranordnung gesendeten elektromagnetischen Wellen im Fahrzeug berechnen und so die empfangene Signalstärke bestimmen. Die Simulation kann beispielsweise auf einer Finite Elemente Methode (FEM) basieren.

Gemäß einem vierten Aspekt der Erfindung wird eine Vorrichtung vorgeschlagen, umfassend Mittel, die dazu eingerichtet sind, das Verfahren nach dem dritten Aspekt auszuführen und/oder zu steuern.

Die Vorrichtung kann beispielsweise (z.B. fest) im Fahrzeug verbaut sein. Beispielsweise umfasst die Vorrichtung ein Gehäuse, welches übrige Komponenten der Vorrichtung einhaust, insbesondere fluiddicht. Beispielsweise kann die Vorrichtung eine Telematikeinheit des Fahrzeugs oder eine Steuerungseinheit einer Transportkältemaschine sein. Die Vorrichtung kann an einer (z.B. einzigen) Stelle im Fahrzeug lokalisiert sein. Auch kann die Vorrichtung sich auf zumindest 2 oder mehr Positionen im Fahrzeug verteilen.

Beispielsweise kann die Vorrichtung dazu eingerichtet sein, an zwei voneinander beabstandeten Positionen im Fahrzeug das Kommunikationssignal zu empfangen.

Gemäß einem Ausführungsbeispiel des vierten Aspekts, umfasst die Vorrichtung
- ein Kommunikationsmittel, wobei das Kommunikationsmittel für das Empfangen der Kommunikationssignale und für die Erfassung der Signalstärke eingerichtet ist, und/oder
- ein Profilbestimmungsmittel, wobei das Profilbestimmungsmittel für das Bestimmen des Signalstärkeprofils eingerichtet ist, und/oder
- ein Zuordnungsmittel, wobei das Zuordnungsmittel für das Zuordnen eingerichtet ist.

Das Kommunikationsmittel ist insbesondere ein drahtloses Kommunikationsmittel. Das Kommunikationsmittel kann beispielsweise zumindest eine Antenne umfassen, über welche das Kommunikationsmittel elektromagnetische Wellen empfangen kann. Das Kommunikationsmittel kann beispielsweise dazu eingerichtet sein, ein Signal (beispielsweise das Kommunikationssignal) zu empfangen. Hierfür kann das Kommunikationsmittel beispielsweise dauerhaft empfangsbereit sein, beispielsweise, solange die Vorrichtung mit Energie versorgt wird. Das Kommunikationsmittel kann beispielsweise auf einer bestimmten Trägerfrequenz Signale empfangen. Beispielsweise kann die Trägerfrequenz im Bereich einiger hundert MHz liegen, beispielsweise zwischen 100 und 800 MHz, beispielsweise 433 MHz. Beispielsweise ist das Kommunikationsmittel dazu eingerichtet, gemäß einem drahtlosen Kommunikationsstandard Nachrichten zu empfangen. Beispielsweise kann dieser Kommunikationsstandard ein Bluetooth Standard sein (https://www.bluetooth.com), Zigbee, ein anderer Kommunikationsstandard und/oder Kombinationen hieraus. Alternativ oder zusätzlich kann das Kommunikationsmittel dazu eingerichtet sein, ein paketbasiertes Empfangen von Daten zu ermöglichen.

Das Kommunikationsmittel kann gemäß einem Ausführungsbeispiel eine isotrope Richtcharakteristik aufweisen und im Wesentlichen aus allen Empfangsrichtungen gleichgut Signale empfangen. Auch eine anisotrope Richtcharakteristik ist möglich. Alternativ oder zusätzlich kann das Kommunikationsmittel mehrere Antennen umfassen, wobei die Antennen beispielsweise voneinander verschiedene rezeptive Felder (beispielsweise Raumwinkel, in welchen Signale oberhalb einer vordefinierten Empfindlichkeit empfangen werden können) aufweisen. Ein (Referenz-)Signalstärkeprofil kann in diesem Falle beispielsweise für eine gegebene Drehwinkelposition mehrere Signalstärken umfassen, jeweils eine pro Antenne.

Gemäß einem Ausführungsbeispiel des vierten Aspekts umfasst die Vorrichtung
- ein Vergleichsmittel, wobei das Vergleichsmittel für den Vergleich zwischen dem bestimmten Signalstärkeprofil und zumindest einem Referenzsignalstärkeprofil eingerichtet ist.

Das Profilbestimmungsmittel, das Zuordnungsmittel und/oder das Vergleichsmittel können beispielsweise (funktionale Einheiten in einem jeweiligen oder gemeinsamen) Rechenmittel sein. Rechenmittel können beispielsweise zumindest einen Prozessor, einen Speicher, einen Microcontroller, ein FPGA, einen ASIC und/oder Kombinationen hieraus umfassen. Beispielsweise kann ein Speicher der Rechenmittel Instruktionen umfassen, welche, wenn sie von dem zumindest einen Rechenmittel ausgeführt werden, die Vorrichtung dazu veranlassen, die entsprechenden Schritte des Verfahrens gemäß dem dritten Aspekt auszuführen und/oder zu steuern. Eine funktionale Einheit kann beispielsweise eine Menge von Instruktionen sein, welche die Steuerung und/oder Ausführung der jeweiligen Schritte des Verfahrens bewirken. Alternativ oder zusätzlich kann eine funktionale Einheit eine Verschaltung eines programmierten FPGA, ein Teilbereich eines ASIC und/oder Kombinationen hieraus sein.

Gemäß einem fünften Aspekt der Erfindung wird ein System vorgeschlagen, umfassend zumindest eine Reifendrucksensoranordnung nach dem zweiten Aspekt und eine Vorrichtung nach dem vierten Aspekt.

Die Vorrichtung kann hierbei dazu eingerichtet sein, Kommunikationssignale von der Reifendrucksensoranordnung zu empfangen und der Reifendrucksensoranordnung eine Radposition des Fahrzeugs zuzuordnen.

Gemäß einem sechsten Aspekt der Erfindung wird ein Fahrzeug vorgeschlagen, insbesondere ein Nutzfahrzeug, umfassend ein System nach dem fünften Aspekt.

Das Fahrzeug kann insbesondere die Eigenschaften aufweisen, welche in Hinblick auf den ersten Aspekt offenbart sind.

Gemäß einem Ausführungsbeispiel des sechsten Aspekts
- ist das Fahrzeug ein Anhänger und/oder
- umfasst das Fahrzeug zumindest sechs Radpositionen.

Das Fahrzeug kann insbesondere ein Anhänger sein, insbesondere für die Verwendung als Nutzfahrzeug, wie in Hinblick auf den ersten Aspekt offenbart.

Beispielsweise kann das Fahrzeug zumindest sechs Radpositionen aufweisen, wobei auf der rechten und der linken Seite des Fahrzeugs jeweils drei Räder in Fahrtrichtung hintereinander angeordnet sind.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs jedoch als notwendiger Bestandteil der vorliegenden Erfindung erachtet werden.

Es zeigen:
- Fig. 1: eine schematische Darstellung einer beispielhaften Ausführungsform eines Straßennutzfahrzeugs gemäß der Erfindung;
- Fig. 2: eine schematische Darstellung einer beispielhaften Ausführungsform eines Rads mit einer Reifendrucksensoranordnung gemäß der Erfindung;
- Fig. 3: eine schematische Darstellung einer beispielhaften Ausführungsform eines Straßennutzfahrzeugs gemäß der Erfindung;
- Fig. 4: eine schematische Darstellung einer beispielhaften Ausführungsform eines Signalstärkeprofils gemäß der Erfindung;
- Fig. 5: eine schematische Darstellung einer beispielhaften Ausführungsform von verschiedenen Radpositionen gemäß der Erfindung;
- Fig. 6: eine schematische Darstellung einer beispielhaften Ausführungsform einer Zuordnung gemäß der Erfindung;
- Fig. 7: eine schematische Darstellung einer beispielhaften Ausführungsform einer Reifendrucksensoranordnung gemäß dem ersten und zweiten Aspekt der Erfindung;
- Fig. 8: eine schematische Darstellung einer beispielhaften Ausführungsform einer Zuordnung gemäß der Erfindung;
- Fig. 9: ein Fließdiagramm einer beispielhaften Ausführungsform des Verfahrens gemäß dem ersten und zweiten Aspekt der Erfindung;
- Fig. 10: ein Fließdiagramm einer beispielhaften Ausführungsform eines Verfahrens gemäß dem dritten und vierten Aspekt der Erfindung;
- Fig. 11: ein Blockdiagramm einer beispielhaften Ausführungsform gemäß dem ersten und zweiten Aspekt der Erfindung;
- Fig. 12: ein Blockdiagramm einer beispielhaften Ausführungsform gemäß dem dritten und vierten Aspekt der Erfindung;
- Fig. 13: beispielhafte Speichermedien.

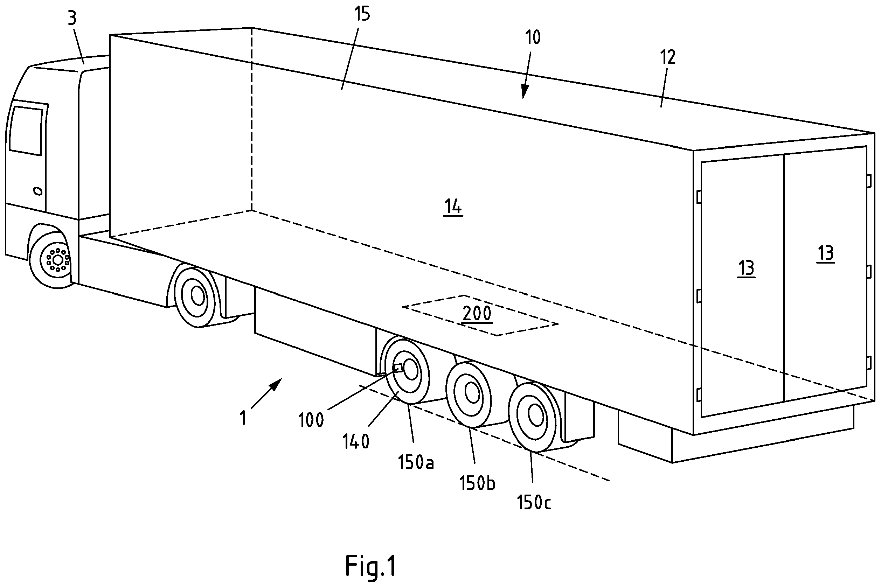

Fig. 1 ist eine schematische Darstellung einer beispielhaften Ausführungsform eines Fahrzeugs 1 gemäß der Erfindung, beispielsweise nach dem sechsen Aspekt der Erfindung.

Das gezeigte Fahrzeug 1 ist ein Nutzfahrzeug 1, genauer ein Anhänger 1, genauer noch ein Sattelauflieger 1, mit einem Kofferaufbau 10. Der Kofferaufbau 10 umfasst eine feste Stirnwand 11, ein festes Dach 12, eine durch Flügeltüren 13 gebildete Rückwand und feste Seitenwände 14. Der Kofferaufbau 10 umschließt dabei einen Laderaum 15 zur Aufnahme von zu transportierenden Gütern.

In dem Fahrzeug 1 ist eine Vorrichtung 200 gemäß dem dritten Aspekt der Erfindung angeordnet, deren ungefähre Position gestrichelt angedeutet ist. Hierbei kann es sich beispielsweise um eine Telematikeinheit 200 des Anhängers 1 handeln. An zumindest einem der Räder 140, an einer Reifenposition 150a oder auch an Rädern weiterer Radpositionen 150b und 150c des Anhängers 1, ist ein Reifendrucksensor 100, beispielsweise gemäß dem zweiten Aspekt der Erfindung, angeordnet. Dieser sendet Kommunikationssignale, welche von der Vorrichtung 200 empfangen werden.

Der Sattelauflieger 1 wird von einem Zugfahrzeug 3 gezogen.

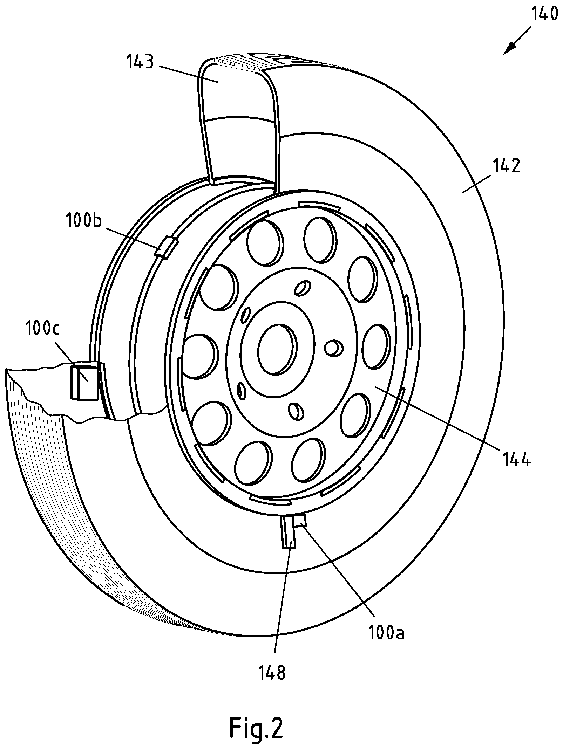

Fig. 2 zeigt ein Rad 140. Dieses umfasst einen Reifen 142. Der Reifen 142 kann beispielsweise Gummi und Metalleinlagen umfassen. Ferner umfasst das Rad 140 eine Felge 144. Die Felge 144 kann beispielsweise aus einem Metallwerkstoff gefertigt sein. Zwischen der Felge 144 und dem Reifen 142 befindet sich ein Innenraum 143 des Reifens 142. Der Innenraum 143 ist mit einem Gas, insbesondere Luft, gefüllt und steht unter Druck. Über ein Ventil 148 kann der Innenraum 143 mit Gas befüllt werden.

An dem Rad 140 ist eine Reifendrucksensoranordnung 100a, 100b, 100c angeordnet, beispielsweise nach dem zweiten Aspekt der Erfindung. Zu Illustrationszwecken sind drei solcher Reifendrucksensoranordnungen 100a, 100b, 100c gezeigt. Üblicherweise wird nur eine Reifendrucksensoranordnung 100a, 100b, 100c pro Rad verwendet. Gezeigt sind verschiedene Befestigungsmethoden für die Reifendrucksensoranordnung. So kann die Reifendrucksensoranordnung 100a in einem Bereich am Ventil 148 des Rads 140 angeordnet sein, entweder innerhalb des Innenraums 143 oder außen an der Felge 144. Die Reifendrucksensoranordnung 100b kann auch an der Felge 144 mit einem Spanngurt befestigt sein oder, siehe Reifendrucksensoranordnung 100c, mit dem Reifen verbunden, beispielsweise anvulkanisiert, sein.

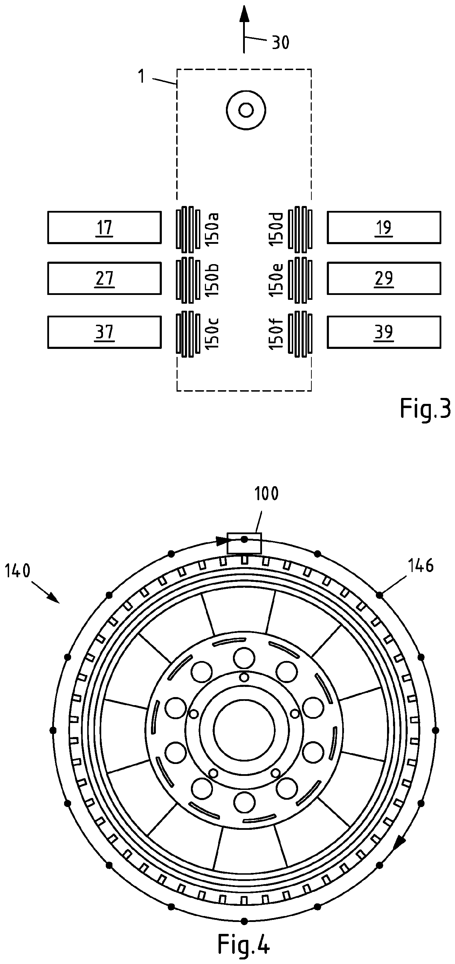

Fig. 3 zeigt eine schematische Ansicht eines Fahrzeug 1 gemäß einem Ausführungsbeispiel, beispielsweise gemäß dem sechsten Aspekt der Erfindung. Das Fahrzeug 1 ist ein Anhänger 1. Dieser wird von einer nicht dargestellten Zugmaschine in einer Vorwärtsfahrtrichtung 30 gezogen. Zu sehen sind die sechs Radpositionen 150a bis 150f. Den Radpositionen 150a - 150f ist jeweils eine Zahl zugeordnet, wie in Fig. 3 gezeigt.

Fig. 4 zeigt ein Rad 140 mit einer Reifendrucksensoranordnung 100, beispielsweise nach dem zweiten Aspekt der Erfindung. Zu sehen sind ebenfalls mehrere Drehwinkelpositionen 146. Wenn sich das Rad 140 dreht, durchläuft dieses, und damit auch die Reifendrucksensoranordnung 100, die gezeigten Drehwinkelpositionen 146. Gezeigt ist eine beschränkte Anzahl von diskreten Drehwinkelpositionen 146. Für die gezeigten Drehwinkelpositionen 146 kann jeweils eine Signalstärke mit einer Vorrichtung, insbesondere nach dem vierten Aspekt der Erfindung, gemessen werden. Hieraus kann das Signalstärkeprofil für das Rad 140, bzw. für die jeweilige Radposition, an welcher das Rad 140 angeordnet ist, erstellt werden.

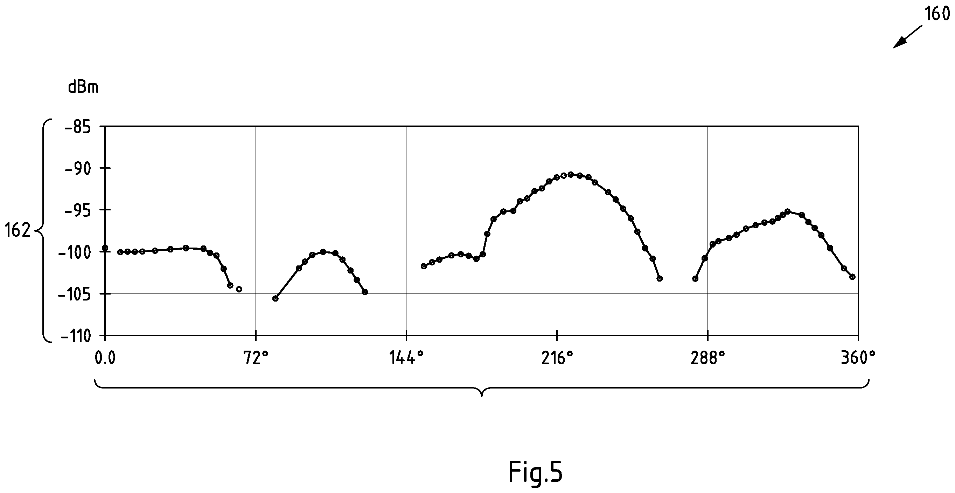

Fig. 5 illustriert ein beispielhaftes Signalstärkeprofil 160. Aufgetragen ist die empfangene Signalstärke 162 gegenüber der Drehwinkelposition 146. Die Drehwinkelpositionen 146 decken vorliegend einen Drehwinkelbereich von (z.B. allen) möglichen Drehwinkelpositionen von 0 bis 360° ab. Beispielsweise kann die Richtcharakteristik der Reifendrucksensoranordnung dafür sorgen, dass ohnehin nur in einem einen Teilbereich der Drehwinkelpositionen 146 ein Signal empfangen werden kann. In diesem Falle kann der Rest der Drehwinkelpositionen 146 außer Acht bleiben. Die Signalstärke 162 kann beispielsweise eine empfangene Leistung, ein Signal-zu-Rausch Verhältnis und/oder ein RSSI Wert (wie gezeigt, in dBm) sein. Die Drehwinkelpositionen 146 können beispielsweise in Grad festgehalten sein. Das Signalstärkeprofil 160 ist insbesondere spezifisch für eine bestimmte Radposition 150 des Fahrzeugs 1. Das gezeigte Signalstärkeprofil 160 kann beispielsweise auch ein Referenzsignalstärkeprofil 160 sein. Zu erkennen sind verschieden hohe Signalstärken 162 für verschiedene Drehwinkelpositionen 146. Insbesondere gibt es Drehwinkelpositionen, an welchen die empfangene Signalstärke 162 Null beträgt (Nullstellen), an denen also (z.B. bislang) kein Signal empfangen wurde.

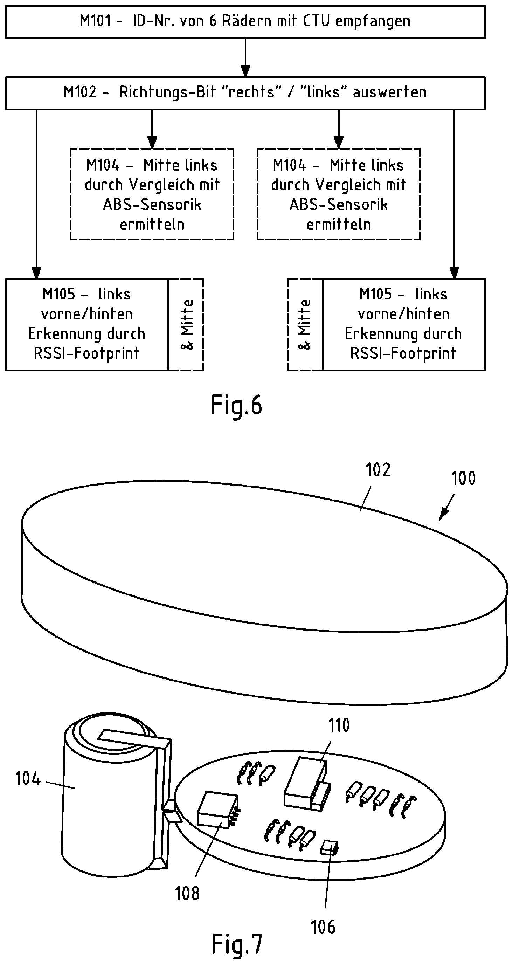

Fig. 6 zeigt eine beispielhafte Vorgehensweise der Zuordnung zwischen einer Reifendrucksensoranordnung 100 und einer jeweiligen Radposition 150. Von beispielhaften 6 Rädern wird mittels einer Telematikeinheit (CTU) ein Kommunikationssignal, umfassend eine Identifikation von der jeweiligen Reifendrucksensoranordnung 100, empfangen (Schritt M101). Vorzugsweise werden mehrere Kommunikationssignale empfangen, sodass ein Signalstärkeprofil aus den empfangenen Kommunikationssignalen errechnet werden kann. Das Kommunikationssignal kann weitere Informationen enthalten, insbesondere eine Drehrichtungsindikation (hier "Drehrichtungs-Bit"). Anhand dieses Drehrichtungs-Bits können die Reifendrucksensoranordnungen 100 in rechts und links (z.B. bezogen auf die jeweilige Seite des Fahrzeugs) aufgeteilt werden (M102, M103). Im Beispiel ist die jeweils mittlere Radposition mit einer ABS-Sensorik versehen, anhand derer eine der Reifendrucksensoranordnungen 100 mit dieser mittleren Radposition (jeweils eine pro Fahrzeugseite) verknüpft werden kann.

In Schritt M105 werden noch die verbleibenden je zwei Radpositionen 150 jeweiligen Reifendrucksensoranordnungen 100 zugeordnet. Hierbei werden beispielsweise zwei Referenzsignalstärkeprofile 166, je eines für die vordere und eines für die hintere Radposition 150, vorgehalten und mit einem Signalstärkeprofil 160 ("RSSI-Footprint") verglichen, welches sich aus den Kommunikationssignalen ergibt. Die Radposition 150 des Referenzsignalstärkeprofils 166, welches am besten zu dem Signalstärkeprofil 160 einer gegebenen Reifendrucksensoranordnung 100 passt, diesem also am ähnlichsten ist, wird der Reifendrucksensoranordnung 100 zugeordnet.

Fig. 7 zeigt eine Reifendrucksensoranordnung 100 gemäß einem Ausführungsbeispiel. Die Reifendrucksensoranordnung 100 umfasst ein Gehäuse 102, welches die Elektronik einhaust. Als Energiespeicher 104 ist eine Knopfzelle 104 vorgesehen. Auf der Platine sind eine Antenne 110 des Kommunikationsmittels, ein Drucksensor 106 sowie ein Beschleunigungssensor 108 angeordnet.

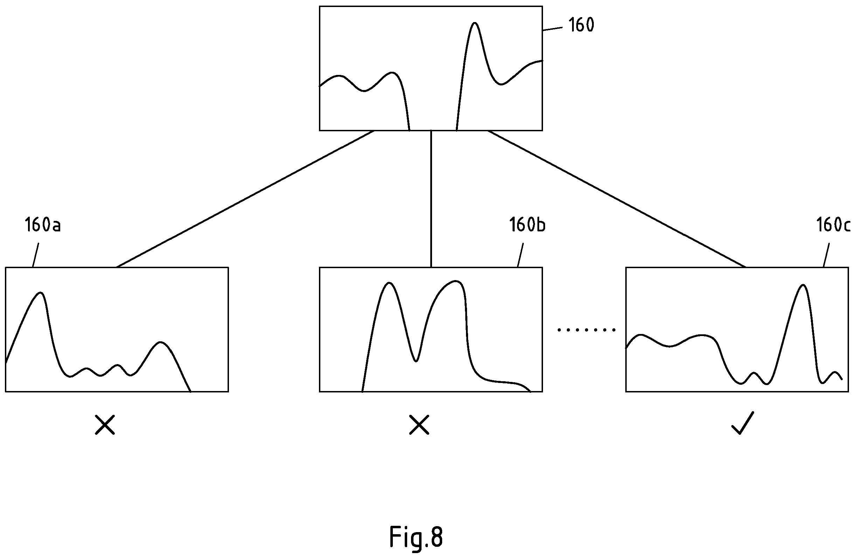

Fig. 8 illustriert die Zuordnung zwischen dem Signalstärkeprofil 160 einer Reifendrucksensoranordnung 100 und das Referenzsignalstärkeprofil 166 einer Radposition 150. Ein Signalstärkeprofil 160 kann mit allen Referenzsignalstärkeprofilen 166a, 166b, 166c verglichen werden, beispielsweise mittels einer Korrelation. Die Radposition 150 desjenigen Referenzsignalstärkeprofils 166, welches die höchste Ähnlichkeit (z.B. Korrelation) mit dem Signalstärkeprofil 160 erzielt, wird der Reifendrucksensoranordnung 100 des Signalstärkeprofils 160 zugeordnet.

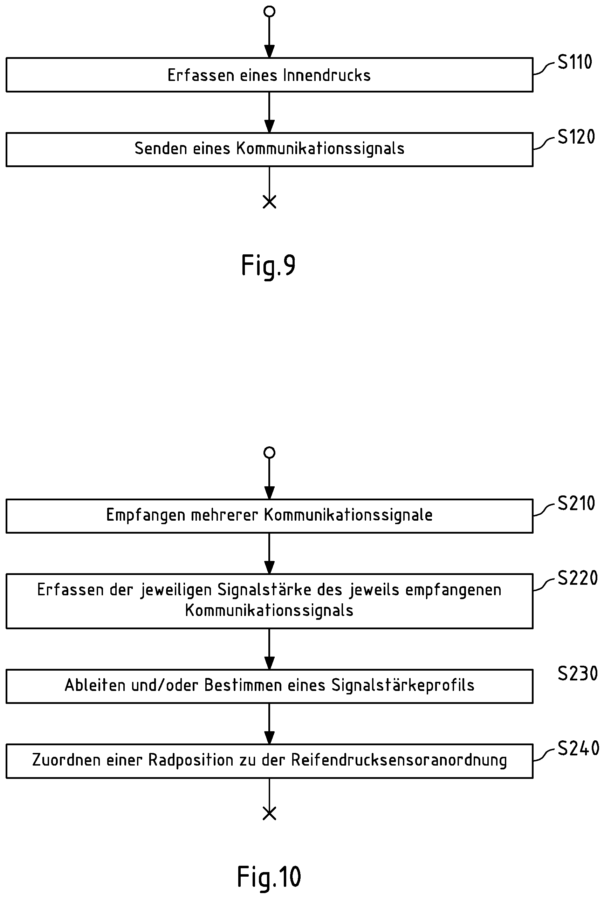

Fig. 9 ist ein Fließdiagram, welches das Verfahren gemäß dem ersten Aspekt illustriert, welches beispielsweise von einer Reifendrucksensoranordnung 100 gemäß dem zweiten Aspekt ausgeführt wird. Zunächst wird in Schritt S110 ein Innendruck des Reifens erfasst, insbesondere mit dem Drucksensor 106 einer Reifendrucksensoranordnung 100, beispielsweise nach dem zweiten Aspekt. Dann wird in Schritt S120 ein Kommunikationssignal gesendet, welches eine Reifendruckindikation und eine Drehwinkelindikation umfasst.

Fig. 10 zeigt in einem weiteren Fließdiagram, das ein Verfahren gemäß dem dritten Aspekt illustriert, wie es beispielsweise von einer Vorrichtung 200 nach dem vierten Aspekt ausgeführt werden kann. In Schritt S210 werden mehrere Kommunikationssignale empfangen, deren Signalstärken in Schritt S220 erfasst werden. Aus den Signalstärken und den in den Kommunikationssignalen enthaltenen Drehwinkelindikationen wird in Schritt S230 ein Signalstärkeprofil abgeleitet und/oder bestimmt. Dieses Signalstärkeprofil nutzt Schritt S240 dann zum Zuordnen einer Radposition 150 zu der Reifendrucksensoranordnung 100.

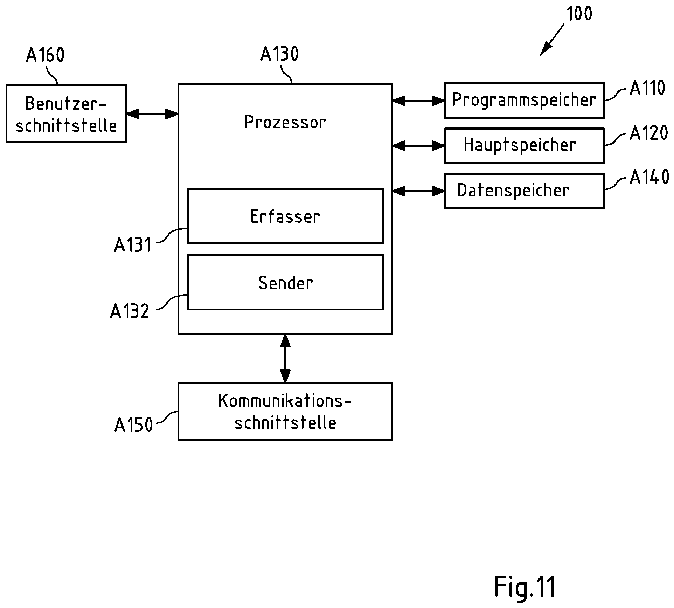

Fig. 11 zeigt ein Ausführungsbeispiel einer Reifendrucksensoranordnung 100 gemäß dem zweiten Aspekt. Die Reifendrucksensoranordnung 100 kann einen Programmspeicher A110, einen Hauptspeicher A120 und einen Datenspeicher A140 umfassen. Die Reifendrucksensoranordnung 100 kann ferner eine Benutzerschnittstelle A160 umfassen, die es beispielsweise einem Benutzer der Vorrichtung ermöglichen kann, mit ihr zu interagieren. Die Vorrichtung kann ferner eine Kommunikationsschnittstelle A150 umfassen, die beispielsweise so konfiguriert sein kann, dass sie mit mindestens einer anderen Vorrichtung, beispielsweise einer Vorrichtung gemäß dem vierten Aspekt, kommuniziert. Insbesondere kann die Kommunikationsschnittstelle A150 dazu eingerichtet sein, das Kommunikationssignal zu senden.

Die Reifendrucksensoranordnung 100 kann mindestens die Funktionseinheiten A131 und A132 umfassen. Die Funktionseinheiten können hier und im Folgenden beispielsweise Softwaremodulen, Teilen eines Computerprogramms, Computerbefehlen, funktionalen elektronischen Schaltungen, mit der Reifendrucksensoranordnung 100 verbundenen funktionalen Komponenten und/oder Kombinationen hieraus entsprechen. Die Funktionseinheiten korrespondieren mit den jeweiligen Funktionen, wie sie im Flussdiagramm in Abbildung 9 dargestellt sind. Der Sender A132 kann beispielweise gemeinsam mit der Kommunikationsschnittstelle A150 das Senden des Kommunikationssignals bewirken.

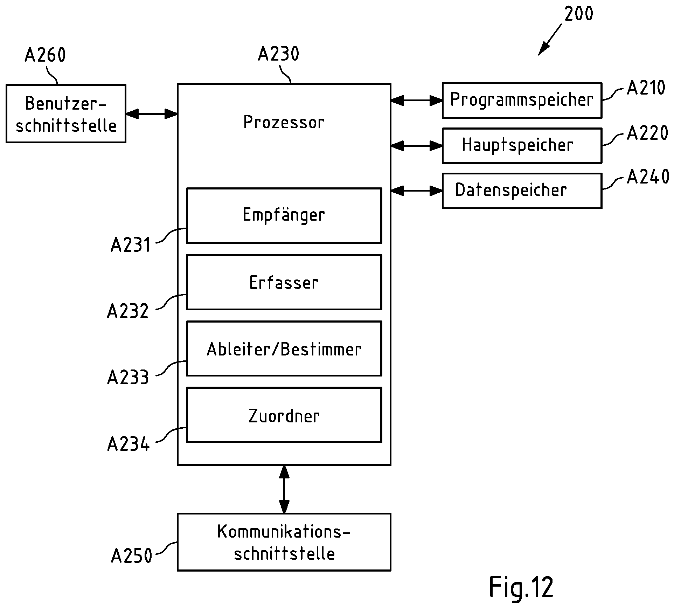

Fig. 12 zeigt eine Vorrichtung 200, insbesondere gemäß dem vierten Aspekt. Die Vorrichtung 200 kann Speicherkomponenten A210, A220, A240, eine Benutzerschnittstelle A260 und eine Kommunikationsschnittstelle A250 umfassen, wiederum ähnlich wie die für den zweiten beispielhaften Aspekt in Fig. 11 zur Reifendrucksensoranordnung 100. Die Vorrichtung 200 kann ferner die Funktionseinheiten A231 bis A234 umfassen, die jeweils mit den im Flussdiagramm in Fig. 9 dargestellten Schritten korrespondieren.

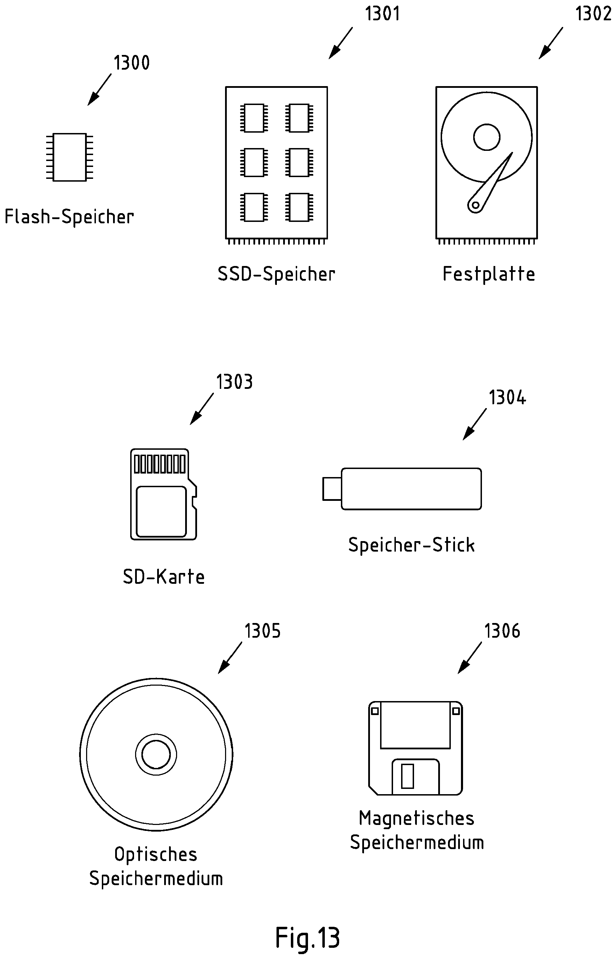

Fig. 13 ist eine schematische Darstellung von Beispielen von materiellen und nichtvergänglichen computerlesbaren Speichermedien gemäß der vorliegenden Erfindung, die beispielsweise zur Implementierung von Programm- und/oder Hauptspeicher A110, A120, A140, A210, A220, A240 der Reifendrucksensoranordnung 100 und/oder der Vorrichtung 200 der Fig. 10 und 12 verwendet werden können. Fig. 13 zeigt einen Flash-Speicher 1300, der z.B. auf eine Leiterplatte gelötet oder gebondet sein kann, ein Solid-State-Laufwerk 1301 mit einer Vielzahl von Speicherchips (z.B. Flash-Speicherchips), eine magnetische Festplatte 1302, eine Secure Digital (SD)-Karte 1303, einen Universal Serial Bus (USB)-Speicherstick 1304, ein optisches Speichermedium 1305 (wie z.B. eine CD-ROM oder DVD) und ein magnetisches Speichermedium 1306.

Ferner sollen die folgenden Ausführungsbeispiel als explizit offenbart gelten.

### Ausführungsbeispiel 1:

Verfahren zur Reifendrucküberwachung eines Fahrzeugs, insbesondere eines Nutzfahrzeugs, ausgeführt durch eine Reifendrucksensoranordnung, beispielsweise durch eine Reifendrucksensoranordnung nach dem zweiten Aspekt, umfassend
- Erfassen eines Innendrucks eines Reifens eines Rads,
- Senden eines Kommunikationssignals umfassend eine Reifendruckindikation und eine Drehwinkelindikation, wobei die Reifendruckindikation zumindest den erfassten Innendruck des Reifens repräsentiert, und wobei die Drehwinkelindikation zumindest eine Drehwinkelposition des Rads repräsentiert.

### Ausführungsbeispiel 2:

Verfahren nach Ausführungsbeispiel 1, wobei das Kommunikationssignal ferner eine Identifikation der Reifendrucksensoranordnung umfasst, und/oder wobei das Kommunikationssignal ferner eine Drehrichtungsindikation des Rads umfasst, und/oder wobei das Kommunikationssignal ferner eine Drehgeschwindigkeitsindikation des Rads umfasst.

### Ausführungsbeispiel 3:

Verfahren nach Ausführungsbeispiel 1 oder 2, ferner umfassend
- Erfassen zumindest einer Beschleunigung.

### Ausführungsbeispiel 4:

Verfahren nach Ausführungsbeispiel 3,
- wobei mehrere Beschleunigungen in zumindest zwei oder drei verschiedenen Erfassungsachsen erfasst werden.

### Ausführungsbeispiel 5:

Verfahren nach Ausführungsbeispiel 3 oder 4,
- wobei die Drehwinkelindikation auf der zumindest einen erfassten Beschleunigung basiert.

### Ausführungsbeispiel 6:

Verfahren nach Ausführungsbeispiel 5,
- wobei die Drehwinkelindikation die zumindest eine erfasste Beschleunigung repräsentiert, und/oder
- wobei die Drehwinkelindikation eine, zumindest teilweise basierend auf der zumindest einen erfassten Beschleunigung, abgeleitete Drehwinkelposition repräsentiert.

### Ausführungsbeispiel 7:

Verfahren nach einem der Ausführungsbeispiele 3 bis 6, ferner umfassend
- Ableiten und/oder Bestimmen einer Drehwinkelposition des Rads, einer Drehrichtung des Rads und/oder einer Drehgeschwindigkeit des Rads aus der Drehwinkelindikation und/oder aus der zumindest einen erfassten Beschleunigung.

### Ausführungsbeispiel 8:

Reifendrucksensoranordnung, beispielsweise eine Reifendrucksensoranordnung nach dem zweiten Aspekt, für Fahrzeuge, insbesondere Nutzfahrzeuge, umfassend einen Drucksensor und Mittel, die dazu eingerichtet sind, das Verfahren nach einem der Ausführungsbeispiele 1 bis 7 auszuführen und/oder zu steuern.

### Ausführungsbeispiel 9:

Reifendrucksensoranordnung nach Ausführungsbeispiel 8,
- wobei der Drucksensor für das Erfassen des Innendrucks eines Reifens eines Rads eingerichtet ist, und/oder
- umfassend ein Kommunikationsmittel, wobei das Kommunikationsmittel für das Senden des Kommunikationssignals eingerichtet ist.

### Ausführungsbeispiel 10:

Reifendrucksensoranordnung nach Ausführungsbeispiel 8 oder 9, ferner umfassend
- einen Beschleunigungssensor, wobei der Beschleunigungssensor dazu eingerichtet ist, die zumindest eine Beschleunigung zu erfassen.

### Ausführungsbeispiel 11:

Reifendrucksensoranordnung nach einem der Ausführungsbeispiele 8 bis 10, ferner umfassend
- ein Ableitungs- und/oder Bestimmungsmittel, wobei das Ableitungs- und/oder Bestimmungsmittel für die Ableitung der Drehwinkelposition, Drehrichtung und/oder Drehgeschwindigkeit eingerichtet ist.

### Ausführungsbeispiel 12:

Verfahren zur Reifendrucküberwachung eines Fahrzeugs, insbesondere eines Nutzfahrzeugs, ausgeführt durch eine Vorrichtung, umfassend
- Empfangen mehrerer Kommunikationssignale, jeweils umfassend eine jeweilige Reifendruckindikation eines Reifens eines Rads und eine jeweilige Drehwinkelindikation eines Rads, von einer Reifendrucksensoranordnung, und
- Erfassen der jeweiligen Signalstärke des jeweils empfangenen Kommunikationssignals,
- Ableiten und/oder Bestimmen eines Signalstärkeprofils der Reifendrucksensoranordnung, zumindest teilweise basierend auf den von den empfangenen Kommunikationssignalen umfassten Drehwinkelindikationen sowie den erfassten Signalstärken,
- Zuordnen einer Radposition zu der Reifendrucksensoranordnung, zumindest basierend auf dem Signalstärkeprofil.

### Ausführungsbeispiel 13:

Verfahren nach Ausführungsbeispiel 12,
- wobei das Zuordnen zumindest teilweise auf einem Vergleich zwischen dem bestimmten Signalstärkeprofil und zumindest einem Referenzsignalstärkeprofil für zumindest eine Radposition basiert.

### Ausführungsbeispiel 14:

Verfahren nach Ausführungsbeispiel 12 oder 13,
- wobei das Kommunikationssignal ferner eine Identifikation der Reifendrucksensoranordnung umfasst, und/oder wobei das Kommunikationssignal ferner eine Drehrichtungsindikation des Rads umfasst, und/oder wobei das Kommunikationssignal ferner eine Drehgeschwindigkeitsindikation des Rads umfasst.

### Ausführungsbeispiel 15:

Verfahren nach einem der Ausführungsbeispiele 12 bis 14, ferner umfassend
- Ableiten und/oder Bestimmen einer Drehwinkelposition, einer Drehrichtung und/oder einer Drehgeschwindigkeit aus der empfangenen Drehwinkelindikation.

### Ausführungsbeispiel 16:

Verfahren nach einem der Ausführungsbeispiele 12 bis 15,
- wobei das Signalstärkeprofil und/oder das Referenzsignalstärkeprofil einer Verteilung einer Signalstärke über zumindest einen Teil der möglichen Drehwinkelpositionen entspricht, wobei die Signalstärke die Stärke eines von einer Reifendrucksensoranordnung übermittelten und der Vorrichtung empfangenen Signals entspricht.

### Ausführungsbeispiel 17:

Verfahren nach einem der Ausführungsbeispiele 12 bis 16, wobei das Referenzsignalstärkeprofil
- für eine Radposition vordefiniert ist und/oder
- empirisch bestimmt ist, insbesondere zumindest teilweise basierend auf der Beschleunigung und/oder auf einem Drehwinkelmesser, und/oder
- modellbasiert, insbesondere basierend auf einer Simulation, bestimmt ist und/oder
- auf einem physikalischen Übertragungskanal, insbesondere drahtlosen physikalischen Übertragungskanal, zwischen der Reifendrucksensoranordnung und der Vorrichtung basiert.

### Ausführungsbeispiel 18:

Vorrichtung, umfassend Mittel, die dazu eingerichtet sind, das Verfahren nach einem der Ausführungsbeispiele 12 bis 17 auszuführen und/oder zu steuern.

### Ausführungsbeispiel 19:

Vorrichtung nach Ausführungsbeispiel 18, umfassend
- ein Kommunikationsmittel, wobei das Kommunikationsmittel für das Empfangen der Kommunikationssignale und für die Erfassung der Signalstärke eingerichtet ist, und/oder
- ein Profilbestimmungsmittel, wobei das Profilbestimmungsmittel für das Bestimmen des Signalstärkeprofils eingerichtet ist, und/oder
- ein Zuordnungsmittel, wobei das Zuordnungsmittel für das Zuordnen eingerichtet ist.

### Ausführungsbeispiel 20:

Vorrichtung nach Ausführungsbeispiel 18 oder 19, ferner umfassend
- ein Vergleichsmittel, wobei das Vergleichsmittel für den Vergleich zwischen dem bestimmten Signalstärkeprofil und zumindest einem Referenzsignalstärkeprofil eingerichtet ist.

### Ausführungsbeispiel 21:

Eine Vorrichtung, z.B. die Reifendrucksensoranordnung nach dem zweiten Aspekt, mit mindestens einem Prozessor; und mindestens einem Speicher, der Anweisungen enthält, die, wenn sie von dem mindestens einen Prozessor ausgeführt werden, die Vorrichtung veranlassen, zumindest das Verfahren gemäß einem der Ausführungsbeispiele 1 bis 7 durchzuführen und/oder zu steuern.

### Ausführungsbeispiel 22:

Ein Computerprogramm, wobei das Computerprogramm, wenn es von einem Prozessor ausgeführt wird, eine Vorrichtung, z.B. die Vorrichtung gemäß dem zweiten Aspekt, veranlasst, die Aktionen und/oder Schritte des Verfahrens gemäß einem der Ausführungsbeispiele 1 bis 7 durchzuführen und/oder zu steuern.

### Ausführungsbeispiel 23:

Eine Vorrichtung, z.B. die Vorrichtung nach dem vierten Aspekt, mit mindestens einem Prozessor; und mindestens einem Speicher, der Anweisungen enthält, die, wenn sie von dem mindestens einen Prozessor ausgeführt werden, die Vorrichtung veranlassen, zumindest das Verfahren gemäß einem der Ausführungsbeispiele 12 bis 17 durchzuführen und/oder zu steuern.

### Ausführungsbeispiel 24:

Ein Computerprogramm, wobei das Computerprogramm, wenn es von einem Prozessor ausgeführt wird, eine Vorrichtung, z.B. die Vorrichtung gemäß dem vierten Aspekt, veranlasst, die Aktionen und/oder Schritte des Verfahrens gemäß einem der Ausführungsbeispiele 12 bis 17 durchzuführen und/oder zu steuern.

### Ausführungsbeispiel 25:

Ein Computerprogrammprodukt, das ein Computerprogramm gemäß Ausführungsbeispiel 22 umfasst.

### Ausführungsbeispiel 26:

Ein Computerprogrammprodukt, das ein Computerprogramm gemäß Ausführungsbeispiel 24 umfasst.

### Ausführungsbeispiel 27:

Ein System, umfassend:
mindestens eine erste Vorrichtung gemäß Ausführungsform 8 bis 11 oder 21 und mindestens eine zweite Vorrichtung gemäß Ausführungsform 18 bis 20 oder 23.

### Ausführungsbeispiel 28:

Ein Fahrzeug, insbesondere ein Nutzfahrzeug, umfassend ein System gemäß Ausführungsbeispiel 27.

### Ausführungsbeispiel 29:

Ein Fahrzeug nach Ausführungsbeispiel 28,
- wobei das Fahrzeug ein Anhänger ist und/oder
- wobei das Fahrzeug zumindest sechs Radpositionen umfasst.

In der vorliegenden Offenbarung ist jede in den beschriebenen Ausführungsformen dargestellte Verbindung so zu verstehen, dass die beteiligten Komponenten funktionell gekoppelt sind. Daher können die Verbindungen direkt oder indirekt sein, mit einer beliebigen Anzahl oder Kombination von dazwischenliegenden Elementen, und es kann lediglich eine funktionelle Beziehung zwischen den Komponenten bestehen.

Darüber hinaus können alle hierin beschriebenen oder dargestellten Verfahren, Prozesse und Aktionen unter Verwendung von ausführbaren Anweisungen in einem Mehrzweck- oder Spezialprozessor implementiert und auf einem computerlesbaren Speichermedium (z. B. Festplatte, Speicher oder dergleichen) gespeichert werden, um von einem solchen Prozessor ausgeführt zu werden. Verweise auf ein "computerlesbares Speichermedium" sollten so verstanden werden, dass sie auch spezialisierte Schaltungen wie FPGAs, ASICs, Signalverarbeitungsgeräte und andere Geräte umfassen.

Der Ausdruck "A und/oder B" umfasst eines der folgenden drei Szenarien: (i) A, (ii) B, (iii) A und B. Der Ausdruck "A und/oder B" hat die gleiche Bedeutung wie der Ausdruck "A oder B", und der Ausdruck "mindestens eines von A oder B" kann hier verwendet werden. Außerdem ist der Artikel "ein" nicht als "ein" (einziges) zu verstehen, d. h. die Verwendung des Ausdrucks "ein Element" schließt nicht aus, dass auch weitere Elemente vorhanden sind. Der Begriff "umfassend" ist in einem offenen Sinne zu verstehen, d.h. dass ein Gegenstand, der "ein Element A" umfasst, neben dem Element A auch weitere Elemente umfassen kann.

Es versteht sich, dass alle vorgestellten Ausführungsbeispiele (z.B. nur) beispielhaft sind, und dass jedes Merkmal, das für ein bestimmtes Ausführungsbeispiel vorgestellt wird, mit jedem beliebigen Aspekt allein oder in Kombination mit einem beliebigen Merkmal, das für dasselbe oder ein anderes bestimmtes Ausführungsbeispiel vorgestellt wird, und/oder in Kombination mit einem beliebigen anderen, nicht erwähnten Merkmal verwendet werden kann. Insbesondere sind die in dieser Beschreibung dargestellten Ausführungsbeispiele so zu verstehen, dass sie auch in allen möglichen Kombinationen miteinander offenbart werden, soweit dies technisch sinnvoll ist und die Ausführungsbeispiele keine Alternativen zueinander darstellen. Es versteht sich ferner, dass jedes Merkmal, das für ein Ausführungsbeispiel in einer bestimmten Kategorie (Verfahren/Gerät/Computerprogramm/System) dargestellt wird, auch in entsprechender Weise in einem Ausführungsbeispiel einer beliebigen anderen Kategorie verwendet werden kann. Es sollte auch verstanden werden, dass das Vorhandensein eines Merkmals in den vorgestellten Ausführungsbeispielen nicht unbedingt bedeutet, dass dieses Merkmal ein wesentliches Merkmal darstellt und nicht weggelassen oder ersetzt werden kann.

Die Angabe, dass ein Merkmal mindestens eines der nachfolgend aufgezählten Merkmale umfasst, ist nicht zwingend in der Weise, dass das Merkmal alle nachfolgend aufgezählten Merkmale oder mindestens ein Merkmal aus der Vielzahl der nachfolgend aufgezählten Merkmale umfasst. Auch eine Auswahl der aufgezählten Merkmale in beliebiger Kombination oder eine Auswahl von (z.B. nur) einem der aufgezählten Merkmale ist möglich. Auch die spezifische Kombination aller nachfolgend aufgezählten Merkmale kann in Betracht gezogen werden. Auch eine Vielzahl von (z.B. nur) einem der aufgezählten Merkmale kann möglich sein.

Die oben dargestellte Abfolge aller Verfahrensschritte ist nicht zwingend, auch alternative Abfolgen sind denkbar. Dennoch ist die in den Figuren beispielhaft dargestellte konkrete Abfolge von Verfahrensschritten als eine mögliche Abfolge von Verfahrensschritten für die jeweilige Ausführungsform, die durch die jeweilige Figur beschrieben wird, anzusehen.

Der Gegenstand ist oben anhand von Ausführungsbeispielen beschrieben worden. Es wird darauf hingewiesen, dass es alternative Wege und Variationen gibt, die für den Fachmann naheliegend sind und umgesetzt werden können, ohne vom Anwendungsbereich der beigefügten Ansprüche abzuweichen.

## Patentansprüche

1. Verfahren zur Reifendrucküberwachung eines Fahrzeugs, insbesondere Nutzfahrzeugs, ausgeführt durch eine Reifendrucksensoranordnung, umfassend
- Erfassen eines Innendrucks eines Reifens eines Rads,
- Senden eines Kommunikationssignals umfassend eine Reifendruckindikation und eine Drehwinkelindikation, wobei die Reifendruckindikation zumindest den erfassten Innendruck des Reifens repräsentiert, und wobei die Drehwinkelindikation zumindest eine Drehwinkelposition des Rads repräsentiert.

2. Verfahren nach Anspruch 1, wobei das Kommunikationssignal ferner eine Identifikation der Reifendrucksensoranordnung umfasst, und/oder wobei das Kommunikationssignal ferner eine Drehrichtungsindikation des Rads umfasst, und/oder wobei das Kommunikationssignal ferner eine Drehgeschwindigkeitsindikation des Rads umfasst.

3. Verfahren nach Anspruch 1 oder 2, ferner umfassend
- Erfassen zumindest einer Beschleunigung und/oder
- Erfassen zumindest einer Beschleunigung, wobei mehrere Beschleunigungen in zumindest zwei oder drei verschiedenen Erfassungsachsen erfasst werden.

4. Verfahren nach Anspruch 3,
- wobei die Drehwinkelindikation auf der zumindest einen erfassten Beschleunigung basiert und/oder
- wobei die Drehwinkelindikation die zumindest eine erfasste Beschleunigung repräsentiert, und/oder
- wobei die Drehwinkelindikation eine zumindest teilweise basierend auf der zumindest einen erfassten Beschleunigung abgeleitete Drehwinkelposition repräsentiert.

5. Verfahren nach einem der Ansprüche 3 bis 4, ferner umfassend
- Ableiten und/oder Bestimmen einer Drehwinkelposition des Rads, einer Drehrichtung des Rads und/oder einer Drehgeschwindigkeit des Rads aus der Drehwinkelindikation und/oder aus der zumindest einen erfassten Beschleunigung.

6. Reifendrucksensoranordnung für Fahrzeuge, insbesondere Nutzfahrzeuge, umfassend einen Drucksensor und Mittel, die dazu eingerichtet sind, das Verfahren nach einem der Ansprüche 1 bis 5 auszuführen und/oder zu steuern.

7. Reifendrucksensoranordnung nach Anspruch 6, ferner umfassend
- einen Beschleunigungssensor, wobei der Beschleunigungssensor dazu eingerichtet ist, die zumindest eine Beschleunigung zu erfassen.

8. Verfahren zur Reifendrucküberwachung eines Fahrzeugs, insbesondere Nutzfahrzeugs, ausgeführt durch eine Vorrichtung, umfassend
- Empfangen mehrerer Kommunikationssignale jeweils umfassend eine jeweilige Reifendruckindikation eines Reifens eines Rads und eine jeweilige Drehwinkelindikation eines Rads von einer Reifendrucksensoranordnung, und
- Erfassen der jeweiligen Signalstärke des jeweils empfangenen Kommunikationssignals,
- Ableiten und/oder Bestimmen eines Signalstärkeprofils der Reifendrucksensoranordnung zumindest teilweise basierend auf den von den empfangenen Kommunikationssignalen umfassten Drehwinkelindikationen sowie den erfassten Signalstärken,
- Zuordnen einer Radposition zu der Reifendrucksensoranordnung zumindest basierend auf dem Signalstärkeprofil.

9. Verfahren nach Anspruch 8,
- wobei das Zuordnen zumindest teilweise auf einem Vergleich zwischen dem bestimmten Signalstärkeprofil und zumindest einem Referenzsignalstärkeprofil für zumindest eine Radposition basiert.

10. Verfahren nach Anspruch 8 oder 9,
- wobei das Kommunikationssignal ferner eine Identifikation der Reifendrucksensoranordnung umfasst, und/oder wobei das Kommunikationssignal ferner eine Drehrichtungsindikation des Rads umfasst, und/oder wobei das Kommunikationssignal ferner eine Drehgeschwindigkeitsindikation des Rads umfasst.

11. Verfahren nach einem der Ansprüche 8 bis 10, ferner umfassend
- Ableiten und/oder Bestimmen einer Drehwinkelposition, Drehrichtung und/oder Drehgeschwindigkeit aus der empfangenen Drehwinkelindikation.

12. Verfahren nach einem der Ansprüche 8 bis 11, wobei das Referenzsignalstärkeprofil
- für eine Radposition vordefiniert ist und/oder
- empirisch bestimmt ist, insbesondere zumindest teilweise basierend auf der Beschleunigung und/oder auf einem Drehwinkelmesser, und/oder
- modellbasiert, insbesondere basierend auf einer Simulation, bestimmt ist und/oder
- auf einem physikalischen Übertragungskanal, insbesondere drahtlosen physikalischen Übertragungskanal, zwischen der Reifendrucksensoranordnung und der Vorrichtung basiert.

13. Vorrichtung, umfassend Mittel, die dazu eingerichtet sind, das Verfahren nach einem der Ansprüche 8 bis 11 auszuführen und/oder zu steuern.

14. System umfassend zumindest eine Reifendrucksensoranordnung nach einem der Ansprüche 6 oder 7 und eine Vorrichtung nach Anspruch 13.

15. Fahrzeug, insbesondere Nutzfahrzeug, umfassend ein System gemäß Anspruch 14.
